# EUROPEAN PATENT APPLICATION

(11) **EP 4 481 513 A1**
(43) Date of publication of application: **25.12.2024**
(21) Application number: 24176590.8
(22) Date of filing: 17.05.2024
(51) Int. Cl.: G05B 15/02, G05B 17/02

(54) **BUILDING MANAGEMENT SYSTEM WITH PLANT SIMULATION GENERATION**

(30) Priority: 19.05.2023 US 202363467684 P
(71) Applicant: Tyco Fire & Security GmbH, 8212 Neuhausen am Rheinfall (CH)
(72) Inventor: TINAZ, Levent, Milwaukee, WI 53209 (US); SNYDER, Steven C., Milwaukee, WI 53209 (US); BAUMGARTNER, Ryan A., Milwaukee, WI 53202 (US); BURROUGHS, John H., Milwaukee, WI 53222 (US)
(74) Representative: Meissner Bolte Nürnberg

(57) **Abstract**

A method includes receiving, by one or more processors, user input describing characteristics of a central utility plant for a building, the user input comprising textual or audible input, identifying, by the one or more processors, a plurality of pieces of building equipment satisfying the characteristics of the user input using an AI model based on the user input, and generating, by the one or more processors using the AI model, a central utility plant model for the central utility plant based on the textual or audible input. The central utility plant model satisfies the characteristics and includes the identified pieces of building equipment.

## Description

### CROSS-REFERENCE TO RELATED PATENT APPLICATION

This application claims the benefit of and priority to U.S. Provisional Patent Application No. 63/467,684 filed May 19, 2023, the entire disclosure of which is incorporated by reference herein.

### BACKGROUND

The present disclosure relates generally to a building system of a building or campus, for example a central utility plant that servers a building or campus. In some aspects, the present disclosure relates more particularly to systems for managing and processing data of the building system. In some aspects, the present disclosure relates more particularly to efficiently generating a plant simulation, for example for use in optimally controlling a central plant.

Various interactions between building systems, components of building systems, users, technicians, and/or devices managed by users (e.g., technician, plant designers, etc.) can rely on timely generation and presentation of data relating to the interactions, including for performing service or configuration operations. However, it can be difficult to generate the data elements to precisely identify proper response actions or sequences of response actions, as well as options for modified response actions, depending on various factors associated with central utility plants to be modelled, simulations to be executed, control and installation adjustments to be evaluated or implemented, etc.; technical issues with the items of equipment; and the availability of timely, precise data to use for supporting planning or configuration operations.

### SUMMARY

One implementation of the present disclosure is a method. The method includes receiving, by one or more processors, user input describing characteristics of a central utility plant for a building. The user input includes textual or audible input. The method can also include identifying, by the one or more processors, a plurality of pieces of building equipment satisfying the characteristics of the user input using an AI model based on the user input. The method can also include generating, by the one or more processors using the AI model, a central utility plant model for the central utility plant based on the textual or audible input, the central utility plant model satisfying the characteristics and including the identified pieces of building equipment.

In some embodiments, the AI model includes a generative large language model (LLM). In some embodiments, the generative LLM includes a pretrained generative transformer model. In some embodiments, the user input including unstructured natural language input not conforming to a predetermined format, and wherein the generative LLM is configured to generate the central utility plant model from the unstructured natural language input. The generative LLM can also be configured to generate the central utility plant model from the unstructured natural language input without requiring manual configuration of the central utility plant model by the user.

One implementation of the present disclosure is a method that includes receiving, by the one or more processors, a user query describing a desired outcome relating to a central utility plant, configuring, based on the user query and by the one or more processors using a generative AI model, a set of simulations, and running, by the one or more processors, the set of simulations using a central utility plant model.

Another implementation of the present disclosure is a method that includes receiving, by the one or more processors, a user query describing a desired outcome relating to a central utility plant and a constraint or degree of freedom for relating to achieving the desired outcome, configuring, based on the user query and by the one or more processors using a generative AI model, a set of simulations, running, by the one or more processors, the set of simulations using a central utility plant model, providing, by the one or more processors, a response to the user query based on the running the set of simulations using the central utility plant model.

Another implementation of the present disclosure is a method that includes receiving, by one or more processors, user input describing characteristics of a central utility plant for a building, the user input comprising textual or audible input, identifying, by the one or more processors, a plurality of pieces of building equipment satisfying the characteristics of the user input using an AI model based on the user input, generating, by the one or more processors using the AI model, a central utility plant model for the central utility plant based on the textual or audible input, the central utility plant model satisfying the characteristics and including the identified pieces of building equipment, receiving, by the one or more processors, a user query describing a desired outcome relating to the central utility plant, configuring, based on the user query and by the one or more processors using the AI model or an additional AI model, a set of simulations, running, by the one or more processors, the set of simulations using the central utility plant model, and providing, by the one or more processors, a response to the user query based on the running the set of simulations using the central utility plant model.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 is a block diagram of an example of a machine learning model-based system for equipment servicing applications.
FIG. 2 is a block diagram of an example of a language model-based system for equipment servicing applications.
FIG. 3 is a block diagram of an example of the system of FIG. 2 including user application session components.
FIG. 4 is a block diagram of an example of the system of FIG. 2 including feedback training components.
FIG. 5 is a block diagram of an example of the system of FIG. 2 including data fi lters.
FIG. 6 is a block diagram of an example of the system of FIG. 2 including data validation components.
FIG. 7 is a block diagram of an example of the system of FIG. 2 including expert review and intervention components.
FIG. 8 is a flow diagram of a method of generating and using a central utility plant model.
FIG. 9 is another flow diagram of a method of generating and using a central utility plant model.
FIG. 10 is another flow diagram of a method of generating and using a central utility plant model.
FIG. 11 is another flow diagram of a method of generating and using a central utility plant model.
FIG. 12 is a diagram of running simulations using a central utility plant model.

### DETAILED DESCRIPTION

Referring generally to the FIGURES, systems and methods in accordance with the present disclosure can implement various systems to precisely generate data relating to operations to be performed for managing building systems and components and/or items of equipment, including heating, ventilation, cooling, and/or refrigeration (HVAC-R) systems and components and/or central utility plants for buildings and/or campuses. For example, various systems described herein can be implemented to more precisely generate data for various applications including, for example and without limitation, generation and execution of simulations of central utility plants, virtual assistance for supporting technicians responding to service requests; generating technical reports corresponding to service requests; facilitating diagnostics and troubleshooting procedures; recommendations of services to be performed; and/or recommendations for products or tools to use or install as part of service operations. Various such applications can facilitate both asynchronous and real-time service operations, including by generating text data for such applications based on data from disparate data sources that may not have predefined database associations amongst the data sources, yet may be relevant at specific steps or points in time during service operations.

Teachings herein relate to creation and use of models of central utility plants. A central utility plant can include a variety of different interconnected building equipment, such as chillers, cooling towers, boilers, cold water storage, hot water storage, electricity generators (e.g., natural gas generators, photovoltaic systems, wind power systems, other energy sources), as well as airside equipment (e.g., air handling units), for example as described in U.S. Application No. 17/826,635 (Pub. No. 2022/0284519) filed May 27, 2022, the entire disclosure of which is incorporated by reference herein. It can be time-consuming and challenging to set up virtual models of central plants, and can involve manual creation by an expert user and various computationally-expensive processes for testing and validating a manually-created model. Technological solutions according to the teachings herein can enable efficient, intelligent model creation from natural language inputs or other unstructured inputs. Furthermore, in some embodiments, the systems and methods herein provide for use of such models in simulations configured using artificial intelligence approaches which provide for appropriate simulations be executed to provide information requested by a user (e.g., as opposed to a larger set of default simulations or simulations requiring manual guessing by a user), leading to additional gains in computational efficiency with respect to use of central plant models in simulation and related use cases.

Some aspects of the present disclosure relate to simulations for facilitating initial plant design and/or plant redesign. Plant design decisions have a far-reaching effect on plant resource consumption, operating costs, etc. A (e.g., cloud-based) plant simulator can create a virtual representation of a central utility plant and simulates plant utility costs over a time period (e.g., for each hour of a year, run "what-if" scenarios, evaluate plant designs and upgrades, and compare predictions with actual performance. Central utility plant simulations can facilitate identification of optimal central plant configurations, provide right-sizing of plant equipment to reduce upfront cost, and inform plant design decisions to reduce lifecycle costs. However, user interfaces for plant simulator tools can be very technical and not easily understood by users (e.g., other than expert, frequent, trained, etc. users). Furthermore, execution of simulations require substantial computational time (e.g., minutes, hours) such that it is computationally expensive to run plant simulator tools under instructions of users who may be making mistakes in configuring models and simulations due to interface complexity, as such simulations may be set up incorrectly and thus provide only unhelpful or misleading results. Accordingly, some aspects of the present disclosure provide for a simple text or audio interface to provide answers from a plant simulator, for example without a user drawing plant diagrams (or by simplifying drawing of plant diagrams), entering detailed technical information, without manually setting up multiple simulations, and while reducing computation time to solutions provide. For instance, the teachings herein provide for tools that can automatically answer questions such as: What are optimal plant configuration, equipment, or setpoints to reduce my water usage by 20%; reduce my operating cost by 20%; reduce initial investment by 20%; have minimal investment for an 30,000 sqft office building in Tampa, Florida; etc.; or What plant configurations allow me to save the maximum amount of water while reducing my electricity cost and initial amount of investment? The teachings herein provide for simple user inputs, faster processing, and simulations providing detailed insights on central utility plants. In some embodiments, such advantages are achieved by deploying generative artificial intelligence models for generating plant models and/or for configuring simulations from unstructured user input.

In some systems, service operations can be supported by text information, such as predefined text documents such as service, diagnostic, and/or troubleshooting guides. Various such text information may not be useful for specific service requests and/or technicians performing the service. For example, the text information may correspond to different items of equipment or versions of items of equipment to be serviced. The text information, being predefined, may not account for specific technical issues that may be present in the items of equipment to be serviced.

AI and/or machine learning (ML) systems, including but not limited to LLMs, can be used to generate text data and data of other modalities in a more responsive manner to real-time conditions, including generating strings of text data that may not be provided in the same manner in existing documents, yet may still meet criteria for useful text information, such as relevance, style, and coherence. For example, LLMs can predict text data based at least on inputted prompts and by being configured (e.g., trained, modified, updated, fine-tuned) according to training data representative of the text data to predict or otherwise generate.

However, various considerations may limit the ability of such systems to precisely generate appropriate data for specific conditions. For example, due to the predictive nature of the generated data, some LLMs may generate text data that is incorrect, imprecise, or not relevant to the specific conditions. Using the LLMs may require a user to manually vary the content and/or syntax of inputs provided to the LLMs (e.g., vary inputted prompts) until the output of the LLMs meets various objective or subjective criteria of the user. The LLMs can have token limits for sizes of inputted text during training and/or runtime/inference operations (and relaxing or increasing such limits may require increased computational processing, API calls to LLM services, and/or memory usage), limiting the ability of the LLMs to be effectively configured or operated using large amounts of raw data or otherwise unstructured data.

Systems and methods in accordance with the present disclosure can use machine learning models, including LLMs and other generative AI systems, to capture data, including but not limited to unstructured knowledge from various data sources, and process the data to accurately generate outputs, such as completions responsive to prompts, including in structured data formats for various applications and use cases. The system can implement various automated and/or expert-based thresholds and data quality management processes to improve the accuracy and quality of generated outputs and update training of the machine learning models accordingly. The system can enable real-time messaging and/or conversational interfaces for users to provide field data regarding equipment to the system (including presenting targeted queries to users that are expected to elicit relevant responses for efficiently receiving useful response information from users) and guide users, such as service technicians, through relevant service, diagnostic, troubleshooting, and/or repair processes.

This can include, for example, receiving data from technician service reports in various formats, including various modalities and/or multi-modal formats (e.g., text, speech, audio, image, and/or video). The system can facilitate automated, flexible customer report generation, such as by processing information received from service technicians and other users into a standardized format, which can reduce the constraints on how the user submits data while improving resulting reports. The system can couple unstructured service data to other input/output data sources and analytics, such as to relate unstructured data with outputs of timeseries data from equipment (e.g., sensor data; report logs) and/or outputs from models or algorithms of equipment operation, which can facilitate more accurate analytics, prediction services, diagnostics, and/or fault detection. The system can perform classification or other pattern recognition or trend detection operations to facilitate more timely assignment of technicians, scheduling of technicians based on expected times for jobs, and provisioning of trucks, tools, and/or parts. The system can perform root cause prediction by being trained using data that includes indications of root causes of faults or errors, where the indications are labels for or otherwise associated with (unstructured or structure) data such as service requests, service reports, service calls, etc. The system can receive, from a service technician in the field evaluating the issue with the equipment, feedback regarding the accuracy of the root cause predictions, as well as feedback regarding how the service technician evaluated information about the equipment (e.g., what data did they evaluate; what did they inspect; did the root cause prediction or instructions for finding the root cause accurately match the type of equipment, etc.), which can be used to update the root cause prediction model.

For example, the system can provide a platform for fault detection and servicing processes in which a machine learning model is configured based on connecting or relating unstructured data and/or semantic data, such as human feedback and written/spoken reports, with time-series product data regarding items of equipment, so that the machine learning model can more accurately detect causes of alarms or other events that may trigger service responses. For instance, responsive to an alarm for a chiller, the system can more accurately detect a cause of the alarm, and generate a prescription (e.g., for a service technician) for responding to the alarm; the system can request feedback from the service technician regarding the prescription, such as whether the prescription correctly identified the cause of the alarm and/or actions to perform to respond to the cause, as well as the information that the service technician used to evaluate the correctness or accuracy of the prescription; the system can use this feedback to modify the machine learning models, which can increase the accuracy of the machine learning models.

In some embodiments, the system can generate a model of a central utility plant (or other building system) based on one or more natural language inputs (e.g., speech, text, etc.) from a user, for example in which a user describes the equipment of the central utility plant and connections between said equipment in a natural language or other unstructured format as an input to the system. The system can also or alternatively use a blueprint of the plant design as an input. The system can use at least one machine learning model according to the teachings herein to output a model of the central utility plant suitable for use in running simulations of plant operations, for use in online control (e.g., model predictive control, predictive optimization processes, etc.), or for other use cases.

In some instances, significant computational resources (or human user resources) can be required to process data relating to equipment operation, such as time-series product data and/or sensor data, to detect or predict faults and/or causes of faults. In addition, it can be resource-intensive to label such data with identifiers of faults or causes of faults, which can make it difficult to generate machine learning training data from such data. Systems and methods in accordance with the present disclosure can leverage the efficiency of language models (e.g., GPT-based models or other pre-trained LLMs) in extracting semantic information (e.g., semantic information identifying faults, causes of faults, and other accurate expert knowledge regarding equipment servicing) from the unstructured data in order to use both the unstructured data and the data relating to equipment operation to generate more accurate outputs regarding equipment servicing. As such, by implementing language models using various operations and processes described herein, building management and equipment servicing systems can take advantage of the causal/semantic associations between the unstructured data and the data relating to equipment operation, and the language models can allow these systems to more efficiently extract these relationships in order to more accurately predict targeted, useful information for servicing applications at inference-time/runtime. While various implementations are described as being implemented using generative AI models such as transformers and/or GANs, in some embodiments, various features described herein can be implemented using non-generative AI models or even without using AI/machine learning, and all such modifications fall within the scope of the present disclosure.

The system can enable a generative AI-based service wizard interface. For example, the interface can include user interface and/or user experience features configured to provide a question/answer-based input/output format, such as a conversational interface, that directs users through providing targeted information for accurately generating predictions of root cause, presenting solutions, or presenting instructions for repairing or inspecting the equipment to identify information that the system can use to detect root causes or other issues. The system can use the interface to present information regarding parts and/or tools to service the equipment, as well as instructions for how to use the parts and/or tools to service the equipment.

In various implementations, the systems can include a plurality of machine learning models that may be configured using integrated or disparate data sources. This can facilitate more integrated user experiences or more specialized (and/or lower computational usage for) data processing and output generation. Outputs from one or more first systems, such as one or more first algorithms or machine learning models, can be provided at least as part of inputs to one or more second systems, such as one or more second algorithms or machine learning models. For example, a first language model can be configured to process unstructured inputs (e.g., text, speech, images, etc.) into a structure output format compatible for use by a second system, such as a root cause prediction algorithm or equipment configuration model.

The system can be used to automate interventions for equipment operation, servicing, fault detection and diagnostics (FDD), and alerting operations. For example, by being configured to perform operations such as root cause prediction, the system can monitor data regarding equipment to predict events associated with faults and trigger responses such as alerts, service scheduling, and initiating FDD or modifications to configuration of the equipment. The system can present to a technician or manager of the equipment a report regarding the intervention (e.g., action taken responsive to predicting a fault or root cause condition) and requesting feedback regarding the accuracy of the intervention, which can be used to update the machine learning models to more accurately generate interventions.

### I. MACHINE LEARNING MODELS FOR BUILDING MANAGEMENT AND EQUIPMENT SERVICING

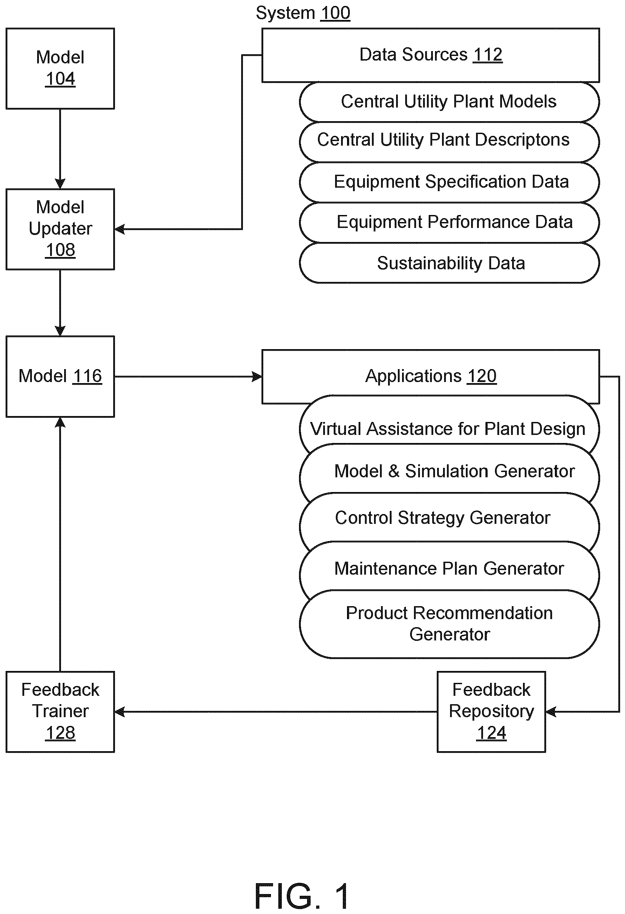

FIG. 1 depicts an example of a system 100. The system 100 can implement various operations for configuring (e.g., training, updating, modifying, transfer learning, fine-tuning, etc.) and/or operating various AI and/or ML systems, such as neural networks of LLMs or other generative AI systems. The system 100 can be used to implement various generative AI-based building equipment servicing operations.

For example, the system 100 can be implemented for operations associated with any of a variety of building management systems (BMSs) or equipment or components thereof. A BMS can include a system of devices that can control, monitor, and manage equipment in or around a building or building area. The BMS can include, for example, a HVAC system, a central utility plant system, a security system, a lighting system, a fire alerting system, any other system that is capable of managing building functions or devices, or any combination thereof. The BMS can include or be coupled with items of equipment, for example and without limitation, such as heaters, chillers, boilers, air handling units, sensors, actuators, refrigeration systems, fans, blowers, heat exchangers, energy storage devices, condensers, valves, or various combinations thereof, for example various equipment and devices of a central utility plant.

The items of equipment can operate in accordance with various qualitative and quantitative parameters, variables, setpoints, and/or thresholds or other criteria, for example. In some instances, the system 100 and/or the items of equipment can include or be coupled with one or more controllers for controlling parameters of the items of equipment, such as to receive control commands for controlling operation of the items of equipment via one or more wired, wireless, and/or user interfaces of controller.

Various components of the system 100 or portions thereof can be implemented by one or more processors coupled with or more memory devices (memory). The processors can be a general purpose or specific purpose processors, an application specific integrated circuit (ASIC), one or more field programmable gate arrays (FPGAs), a group of processing components, or other suitable processing components. The processors may be configured to execute computer code and/or instructions stored in the memories or received from other computer readable media (e.g., CDROM, network storage, a remote server, etc.). The processors can be configured in various computer architectures, such as graphics processing units (GPUs), distributed computing architectures, cloud server architectures, client-server architectures, or various combinations thereof. One or more first processors can be implemented by a first device, such as an edge device, and one or more second processors can be implemented by a second device, such as a server or other device that is communicatively coupled with the first device and may have greater processor and/or memory resources.

The memories can include one or more devices (e.g., memory units, memory devices, storage devices, etc.) for storing data and/or computer code for completing and/or facilitating the various processes described in the present disclosure. The memories can include random access memory (RAM), read-only memory (ROM), hard drive storage, temporary storage, non-volatile memory, flash memory, optical memory, or any other suitable memory for storing software objects and/or computer instructions. The memories can include database components, object code components, script components, or any other type of information structure for supporting the various activities and information structures described in the present disclosure. The memories can be communicably connected to the processors and can include computer code for executing (e.g., by the processors) one or more processes described herein.

### Machine Learning Models

The system 100 can include or be coupled with one or more first models 104. The first model 104 can include one or more neural networks, including neural networks configured as generative models. For example, the first model 104 can predict or generate new data (e.g., artificial data; synthetic data; data not explicitly represented in data used for configuring the first model 104). The first model 104 can generate any of a variety of modalities of data, such as text, speech, audio, images, and/or video data. The neural network can include a plurality of nodes, which may be arranged in layers for providing outputs of one or more nodes of one layer as inputs to one or more nodes of another layer. The neural network can include one or more input layers, one or more hidden layers, and one or more output layers. Each node can include or be associated with parameters such as weights, biases, and/or thresholds, representing how the node can perform computations to process inputs to generate outputs. The parameters of the nodes can be configured by various learning or training operations, such as unsupervised learning, weakly supervised learning, semi-supervised learning, or supervised learning.

The first model 104 can include, for example and without limitation, one or more language models, LLMs, attention-based neural networks, transformer-based neural networks, generative pretrained transformer (GPT) models, bidirectional encoder representations from transformers (BERT) models, encoder/decoder models, sequence to sequence models, autoencoder models, generative adversarial networks (GANs), convolutional neural networks (CNNs), recurrent neural networks (RNNs), diffusion models (e.g., denoising diffusion probabilistic models (DDPMs)), or various combinations thereof.

For example, the first model 104 can include at least one GPT model. The GPT model can receive an input sequence, and can parse the input sequence to determine a sequence of tokens (e.g., words or other semantic units of the input sequence, such as by using Byte Pair Encoding tokenization). The GPT model can include or be coupled with a vocabulary of tokens, which can be represented as a one-hot encoding vector, where each token of the vocabulary has a corresponding index in the encoding vector; as such, the GPT model can convert the input sequence into a modified input sequence, such as by applying an embedding matrix to the token tokens of the input sequence (e.g., using a neural network embedding function), and/or applying positional encoding (e.g., sin-cosine positional encoding) to the tokens of the input sequence. The GPT model can process the modified input sequence to determine a next token in the sequence (e.g., to append to the end of the sequence), such as by determining probability scores indicating the likelihood of one or more candidate tokens being the next token, and selecting the next token according to the probability scores (e.g., selecting the candidate token having the highest probability scores as the next token). For example, the GPT model can apply various attention and/or transformer based operations or networks to the modified input sequence to identify relationships between tokens for detecting the next token to form the output sequence.

The first model 104 can include at least one diffusion model, which can be used to generate image and/or video data. For example, the diffusional model can include a denoising neural network and/or a denoising diffusion probabilistic model neural network. The denoising neural network can be configured by applying noise to one or more training data elements (e.g., images, video frames) to generate noised data, providing the noised data as input to a candidate denoising neural network, causing the candidate denoising neural network to modify the noised data according to a denoising schedule, evaluating a convergence condition based on comparing the modified noised data with the training data instances, and modifying the candidate denoising neural network according to the convergence condition (e.g., modifying weights and/or biases of one or more layers of the neural network). In some implementations, the first model 104 includes a plurality of generative models, such as GPT and diffusion models, that can be trained separately or jointly to facilitate generating multi-modal outputs, such as technical documents (e.g., service guides) that include both text and image/video information.

In some implementations, the first model 104 can be configured using various unsupervised and/or supervised training operations. The first model 104 can be configured using training data from various domain-agnostic and/or domain-specific data sources, including but not limited to various forms of text, speech, audio, image, and/or video data, or various combinations thereof. The training data can include a plurality of training data elements (e.g., training data instances). Each training data element can be arranged in structured or unstructured formats; for example, the training data element can include an example output mapped to an example input, such as a query representing a service request or one or more portions of a service request, and a response representing data provided responsive to the query. The training data can include data that is not separated into input and output subsets (e.g., for configuring the first model 104 to perform clustering, classification, or other unsupervised ML operations). The training data can include human-labeled information, including but not limited to feedback regarding outputs of the models 104, 116. This can allow the system 100 to generate more human-like outputs.

In some implementations, the training data includes data relating to building management systems. For example, the training data can include examples of HVAC-R data, such as operating manuals, technical data sheets, configuration settings, operating setpoints, diagnostic guides, troubleshooting guides, user reports, technician reports. In some implementations, the training data used to configure the first model 104 includes at least some publicly accessible data, such as data retrievable via the Internet.

Referring further to FIG. 1, the system 100 can configure the first model 104 to determine one or more second models 116. For example, the system 100 can include a model updater 108 that configures (e.g., trains, updates, modifies, fine-tunes, etc.) the first model 104 to determine the one or more second models 116. In some implementations, the second model 116 can be used to provide application-specific outputs, such as outputs having greater precision, accuracy, or other metrics, relative to the first model, for targeted applications.

The second model 116 can be similar to the first model 104. For example, the second model 116 can have a similar or identical backbone or neural network architecture as the first model 104. In some implementations, the first model 104 and the second model 116 each include generative AI machine learning models, such as LLMs (e.g., GPT-based LLMs) and/or diffusion models. The second model 116 can be configured using processes analogous to those described for configuring the first model 104.

In some implementations, the model updater 108 can perform operations on at least one of the first model 104 or the second model 116 via one or more interfaces, such as application programming interfaces (APIs). For example, the models 104, 116 can be operated and maintained by one or more systems separate from the system 100. The model updater 108 can provide training data to the first model 104, via the API, to determine the second model 116 based on the first model 104 and the training data. The model updater 108 can control various training parameters or hyperparameters (e.g., learning rates, etc.) by providing instructions via the API to manage configuring the second model 116 using the first model 104.

### Data Sources

The model updater 108 can determine the second model 116 using data from one or more data sources 112. For example, the system 100 can determine the second model 116 by modifying the first model 104 using data from the one or more data sources 112. The data sources 112 can include or be coupled with any of a variety of integrated or disparate databases, data warehouses, digital twin data structures (e.g., digital twins of items of equipment or building management systems or portions thereof), data lakes, data repositories, documentation records, or various combinations thereof. In some implementations, the data sources 112 include HVAC-R data in any of text, speech, audio, image, or video data, or various combinations thereof, such as data associated with HVAC-R components and procedures including but not limited to installation, operation, configuration, repair, servicing, diagnostics, and/or troubleshooting of HVAC-R components and systems. Various data described below with reference to data sources 112 may be provided in the same or different data elements, and may be updated at various points. The data sources 112 can include or be coupled with items of equipment (e.g., where the items of equipment output data for the data sources 112, such as sensor data, etc.). The data sources 112 can include various online and/or social media sources, such as blog posts or data submitted to applications maintained by entities that manage the buildings. The system 100 can determine relations between data from different sources, such as by using timeseries information and identifiers of the sites or buildings at which items of equipment are present to detect relationships between various different data relating to the items of equipment (e.g., to train the models 104, 116 using both timeseries data (e.g., sensor data; outputs of algorithms or models, etc.) regarding a given item of equipment and freeform natural language reports regarding the given item of equipment).

The data sources 112 can include unstructured data or structured data (e.g., data that is labeled with or assigned to one or more predetermined fields or identifiers). For example, using the first model 104 and/or second model 116 to process the data can allow the system 100 to extract useful information from data in a variety of formats, including unstructured/freeform formats, which can allow service technicians to input information in less burdensome formats. The data can be of any of a plurality of formats (e.g., text, speech, audio, image, video, etc.), including multi-modal formats. For example, the data may be received from service technicians in forms such as text (e.g., laptop/desktop or mobile application text entry), audio, and/or video (e.g., dictating findings while capturing video).

The data sources 112 can include central utility plant models. The central utility plant models can include models of central utility plants, including actual (real, built, etc.) central utility plants and designed (e.g., simulated, planned, etc.) central utility plants. The central utility plant models can include representations of equipment, connections between the equipment, spatial arrangements of the equipment, and other information relating to the central utility plants. In some embodiments, each central utility plant model indicates the equipment included (e.g., by model number, equipment type, equipment capacity, etc.) the inputs to each unit of equipment, the outputs of each unit of equipment, connections between the equipment (e.g., an indication that the output of one unit of equipment is an input to another unit of equipment), sources of resources (e.g., utility providers, environmental sources such as solar energy or geothermal power source), and buildings, facilities, etc. that receive resources, heating, cooling, etc. provided by the central utility plant. Central utility plant models can be configured as described in U.S. Application No. 17/826,635 (Pub. No. 2022/0284519) filed May 27, 2022, the entire disclosure of which is incorporated by reference herein.

The data sources 112 can include central utility plant descriptions, for example freeform, natural language, textual, audio, or other user input describing characteristics of central utility plants. In some embodiments, the central utility plant descriptions correspond to central utility plant models also included in the data sources. In some embodiments, the central utility plant descriptions are collected by prompting humans to describe characteristics of different central utility plants, for example so that the central utility plant descriptions included multiple descriptions of the same central utility plant provided by different humans.

The data sources 112 can include equipment specification data, for example relating to the inputs used by different types of equipment (e.g., water, electricity, natural gas, steam, etc.), the outputs of the different types of equipment (e.g., hot water, cold water, hot air, cooled air, electricity, steam, etc.), the size and/or shape of the equipment (e.g., dimensions, etc.), the capacity of equipment (e.g., maximum load production, maximum operating power, etc.), and other information relating to the physical and functional specifications of the equipment. The equipment specification data can include product literature, specification sheets, pricing information, etc. for various equipment. The equipment specification data can include data objects created for central utility plant modelling, for example data objects included in the central utility plant models included in the data sources 112.

The data sources 112 can include equipment performance data, for example data relating to the consumption and production of various equipment. The equipment performance data can include efficiency curves and other subplant models, for example subplant curves and subplant models as discussed in U.S. Patent Publication No. 2021/0132586, U.S. Patent Publication No. 2022/0397882, U.S. Application No 17/686,990 filed March 4, 2022, the entire disclosures of which are incorporated by reference herein, and/or the various data described therein for generating such subplant curves and subplant models. The equipment performance data can provide information relating to the resource consumption of various equipment, the production of the various equipment, etc., for example under different demands, settings, control logic, environmental conditions, etc. The equipment performance data can include run-time data collected for particular units of equipment during real operations, aggregated (e.g., average) performance data determined for a type of equipment (e.g., a particular model of chiller) from data collected for multiple units of equipment, and/or design or expected data given by equipment design/engineering documentation. In some embodiments, the equipment performance data includes maintenance data (e.g., warranty data, work order data, replacement parts data) for various equipment, for example indicative of the average of amount of maintenance required for different types of equipment.

The data sources 112 can include sustainability data, for example relating to energy consumption, water consumption, or other resource consumption; carbon emissions, pollutant emissions, etc.; or green energy generation (e.g., solar generation, wind power generation, geothermal power generation). Sustainability data can include historical values of resource consumption, emissions, generation, etc. associated with different central plants (e.g., operational central plants for which central utility plant models and measured/metered data is available, validated simulations) and/or particular equipment (e.g., particular units, categories of equipment, types of equipment, etc.). Sustainability data can include data from resource providers (e.g., utility providers, electricity grid operators), for example data indicating the marginal operating emissions rates associated with grid electricity available at different locations and/or other metric or data relating to the availability of renewable energy resources.

All such data can be used by the model updater 108 to update (e.g., fine-tune and/or augment) the model 104 to provide the model 116.

### Model Configuration

Referring further to FIG. 1, the model updater 108 can perform various machine learning model configuration/training operations to determine the second models 116 using the data from the data sources 112. For example, the model updater 108 can perform various updating, optimization, retraining, reconfiguration, fine-tuning, or transfer learning operations, or various combinations thereof, to determine the second models 116. The model updater 108 can configure the second models 116, using the data sources 112, to generate outputs (e.g., completions) in response to receiving inputs (e.g., prompts), where the inputs and outputs can be analogous to data of the data sources 112.

For example, the model updater 108 can identify one or more parameters (e.g., weights and/or biases) of one or more layers of the first model 104, and maintain (e.g., freeze, maintain as the identified values while updating) the values of the one or more parameters of the one or more layers. In some implementations, the model updater 108 can modify the one or more layers, such as to add, remove, or change an output layer of the one or more layers, or to not maintain the values of the one or more parameters. The model updater 108 can select at least a subset of the identified one or parameters to maintain according to various criteria, such as user input or other instructions indicative of an extent to which the first model 104 is to be modified to determine the second model 116. In some implementations, the model updater 108 can modify the first model 104 so that an output layer of the first model 104 corresponds to output to be determined for applications 120.

Responsive to selecting the one or more parameters to maintain, the model updater 108 can apply, as input to the second model 116 (e.g., to a candidate second model 116, such as the modified first model 104, such as the first model 104 having the identified parameters maintained as the identified values), training data from the data sources 112. For example, the model updater 108 can apply the training data as input to the second model 116 to cause the second model 116 to generate one or more candidate outputs.

The model updater 108 can evaluate a convergence condition to modify the candidate second model 116 based at least on the one or more candidate outputs and the training data applied as input to the candidate second model 116. For example, the model updater 108 can evaluate an objective function of the convergence condition, such as a loss function (e.g., L1 loss, L2 loss, root mean square error, cross-entropy or log loss, etc.) based on the one or more candidate outputs and the training data; this evaluation can indicate how closely the candidate outputs generated by the candidate second model 116 correspond to the ground truth represented by the training data. The model updater 108 can use any of a variety of optimization algorithms (e.g., gradient descent, stochastic descent, Adam optimization, etc.) to modify one or more parameters (e.g., weights or biases of the layer(s) of the candidate second model 116 that are not frozen) of the candidate second model 116 according to the evaluation of the objective function. In some implementations, the model updater 108 can use various hyperparameters to evaluate the convergence condition and/or perform the configuration of the candidate second model 116 to determine the second model 116, including but not limited to hyperparameters such as learning rates, numbers of iterations or epochs of training, etc.

As described further herein with respect to applications 120, in some implementations, the model updater 108 can select the training data from the data of the data sources 112 to apply as the input based at least on a particular application of the plurality of applications 120 for which the second model 116 is to be used for. For example, the model updater 108 can select data from the equipment specification data 112 for the product recommendation generator application 120, or select various combinations of data from the data sources 112 (e.g., central utility plant models, central utility plant descriptions, equipment specification data) for the model and simulation generator application 120. The model updater 108 can apply various combinations of data from various data sources 112 to facilitate configuring the second model 116 for one or more applications 120.

In some implementations, the system 100 can perform at least one of conditioning, classifier-based guidance, or classifier-free guidance to configure the second model 116 using the data from the data sources 112. For example, the system 100 can use classifiers associated with the data, such as identifiers of equipment, types of units of equipment, a characteristics of central plant models and/or characteristics identified in central utility plant descriptions, etc. to condition the training of the second model 116. For example, the system 100 can combine (e.g., concatenate) various such classifiers with the data for inputting to the second model 116 during training, for at least a subset of the data used to configure the second model 116, which can enable the second model 116 to be responsive to analogous information for runtime/inference time operations.

### Applications

Referring further to FIG. 1, the system 100 can use outputs of the one or more second models 116 to implement one or more applications 120. For example, the second models 116, having been configured using data from the data sources 112, can be capable of precisely generating outputs that represent useful, timely, and/or real-time information for the applications 120. In some implementations, each application 120 is coupled with a corresponding second model 116 that is specifically configured to generate outputs for use by the application 120. Various applications 120 can be coupled with one another, such as to provide outputs from a first application 120 as inputs or portions of inputs to a second application 120.

The applications 120 can include any of a variety of desktop, web-based/browser-based, or mobile applications. For example, the applications 120 can be implemented by enterprise management software systems, employee or other user applications (e.g., applications that relate to BMS functionality such as temperature control, user preferences, conference room scheduling, etc.), equipment portals that provide data regarding items of equipment, or various combinations thereof. The applications 120 can include user interfaces, wizards, checklists, conversational interfaces, chatbots, configuration tools, or various combinations thereof. The applications 120 can receive an input, such as a prompt (e.g., from a user), provide the prompt to the second model 116 to cause the second model 116 to generate an output, such as a completion in response to the prompt, and present an indication of the output. The applications 120 can receive inputs and/or present outputs in any of a variety of presentation modalities, such as text, speech, audio, image, and/or video modalities. For example, the applications 120 can receive unstructured or freeform inputs from a user, such as a service technician, architect, buildings or plant engineer, project manager, other personnel, etc., and generate reports in a standardized format, such as a customer-specific format. This can allow, for example, personnel to automatically, and flexibly, generate customer-ready reports including information relating to central plant model and simulation results; to provide inputs as dictations in order to generate central plant models and/or simulation reports; to provide inputs in any form or a variety of forms, and use the second model 116 (which can be trained to cross-reference metadata in different portions of inputs and relate together data elements) to generate output reports (e.g., the second model 116, having been configured with data that includes time information, can use timestamps of input from dictation and timestamps of when an image is taken, and place the image in the report in a target position or label based on time correlation).

In some implementations, the applications 120 include at least one virtual assistant (e.g., virtual assistance for plant design) application 120. The virtual assistant application can provide various services to support plant design operations, such as presenting information relating to central utility plant models, receiving queries regarding central utility plant models to generate and/or simulations to perform using central utility plant models, and presenting responses indicating central utility plant models and/or simulation results. The virtual assistant application can receive information regarding an item of equipment to be serviced, such as sensor data, text descriptions, or camera images, and process the received information using the second model 116 to generate corresponding responses.

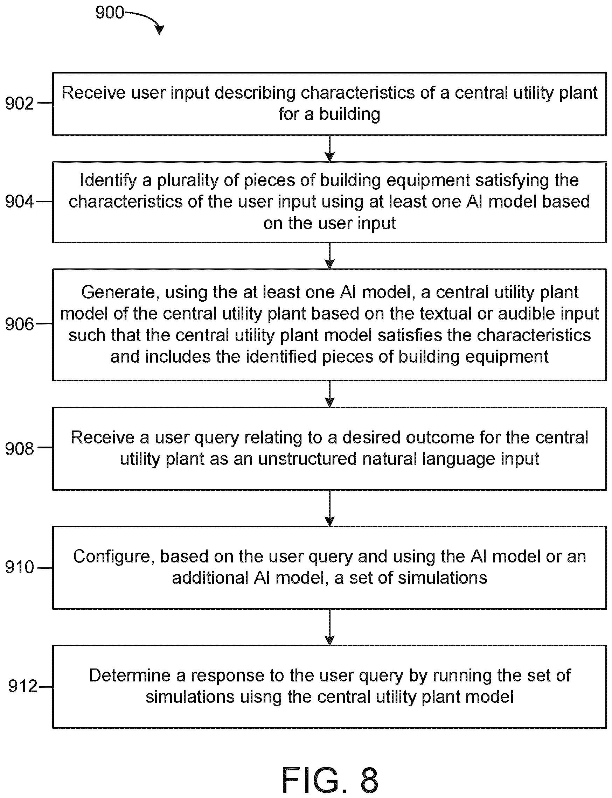

For example, the virtual assistant application 120 can be implemented in a UI/UX wizard configuration, such as to provide a sequence of requests for information from the user (the sequence may include requests that are at least one of predetermined or dynamically generated responsive to inputs from the user for previous requests). For example, the virtual assistant application 120 can provide one or more requests for users such as plant designers, facility managers, or other occupants, and provide the received responses to at least one of the second model 116 or other simulation engine (e.g., as in references incorporated by reference herein above and/or discussed with reference to FIG. 8) to determine a central plant model and/or recommendation for adjusted operation, new equipment to install for a central utility plant, or information supporting other design or operational decisions for a central utility plant. The virtual assistant application 120 can use requests for information such as for unstructured text by which the user describes characteristics of a central plant; answers follow-up questions from the application 120 relating to further details of the central plant; and/or provides image and/or video input (e.g., images of problems, equipment, spaces, plants, etc.). For example, responsive to receiving a response via the virtual assistant application 120 indicating that a user is interested in chillers of a central plant, the system 100 can request, via the virtual assistant application 120, information regarding chillers and connected equipment associated of the central plant, such as pictures of the chillers and central plant, detailed equipment type (e.g., model number, serial number, name, etc.) information, or various combinations thereof.

The virtual assistant application 120 can include a plurality of applications 120 (e.g., variations of interfaces or customizations of interfaces) for a plurality of respective user types. For example, the virtual assistant application 120 can include a first application 120 for a customer user, and a second application 120 for a central plant engineer user. The virtual assistant applications 120 can allow for updating and other communications between the first and second applications 120 as well as the second model 116. Using one or more of the first application 120 and the second application 120, the system 100 can manage continuous/real-time conversations for one or more users, and evaluate the users' engagement with the information provided (e.g., did the user, customer, central plant engineer, etc., follow the provided steps for implementing a recommendation, did the user discontinue providing inputs to the virtual assistant application 120, etc.), such as to enable the system 100 to update the information generated by the second model 116 for the virtual assistant application 120 according to the engagement. In some implementations, the system 100 can use the second model 116 to detect sentiment of the user of the virtual assistant application 120, and update the second model 116 according to the detected sentiment, such as to improve the experience provided by the virtual assistant application 120.

The applications 120 can include, in some implementations, at least one model and simulation generator application 120. The model and simulation generator application 120 can receive inputs relating to characteristics of a central utility plant and/or a user question (query, prompt, request, etc.) relating to a central utility plant. The model and simulation generator application 120 can provide the inputs to a corresponding second model 116 to cause the second model 116 to generate outputs such as a central utility plant model and/or a set of simulations adapted for providing a response to the user question. The model and simulator generator application 120 can provide features according to process 900 described in detail below, according to some embodiments.

The applications 120 can at least one maintenance plan generator application 120. The maintenance plan generator application 120 can receive inputs such as information regarding a central utility plant and maintenance performed at the central utility plant, and provide the inputs to the second model 116 to cause the second model 116 to generate outputs for presenting maintenance plan recommendations, such as a plan expected to optimally balance maintenance actions and equipment operating costs (e.g., using teachings of U.S. Publication No. 2021/0223767, the entire disclosure of which is incorporated by reference herein).

In some implementations, the applications 120 can include a product recommendation generator application 120. The product recommendation generator application 120 can process inputs such as information regarding the item of equipment or the service request, using one or more second models 116 (e.g., models trained using central utility plant model and central utility plant description data from the data sources 112), to determine a recommendation of a part or product to replace or otherwise use for repairing the item of equipment. For example, a unit of equipment to add to a central plant (e.g., a type of equipment, a size of the equipment, a particular equipment model name, etc.) can be determined using the product recommendation generator application 120. In some embodiments, the product recommendation generator application 120 implements, adapts, etc. teachings of U.S. Patent No. 11,238,547 and/or U.S. Patent No. 11,042,924, the entire disclosures of which are incorporated by reference herein.

### Feedback Training

Referring further to FIG. 1, the system 100 can include at least one feedback trainer 128 coupled with at least one feedback repository 124. The system 100 can use the feedback trainer 128 to increase the precision and/or accuracy of the outputs generated by the second models 116 according to feedback provided by users of the system 100 and/or the applications 120.

The feedback repository 124 can include feedback received from users regarding output presented by the applications 120. For example, for at least a subset of outputs presented by the applications 120, the applications 120 can present one or more user input elements for receiving feedback regarding the outputs. The user input elements can include, for example, indications of binary feedback regarding the outputs (e.g., good/bad feedback; feedback indicating the outputs do or do not meet the user's criteria, such as criteria regarding technical accuracy or precision); indications of multiple levels of feedback (e.g., scoring the outputs on a predetermined scale, such as a 1-5 scale or 1-10 scale); freeform feedback (e.g., text or audio feedback); or various combinations thereof.

The system 100 can store and/or maintain feedback in the feedback repository 124. In some implementations, the system 100 stores the feedback with one or more data elements associated with the feedback, including but not limited to the outputs for which the feedback was received, the second model(s) 116 used to generate the outputs, and/or input information used by the second models 116 to generate the outputs (e.g., service request information; information captured by the user regarding the item of equipment).

The feedback trainer 128 can update the one or more second models 116 using the feedback. The feedback trainer 128 can be similar to the model updater 108. In some implementations, the feedback trainer 128 is implemented by the model updater 108; for example, the model updater 108 can include or be coupled with the feedback trainer 128. The feedback trainer 128 can perform various configuration operations (e.g., retraining, fine-tuning, transfer learning, etc.) on the second models 116 using the feedback from the feedback repository 124. In some implementations, the feedback trainer 128 identifies one or more first parameters of the second model 116 to maintain as having predetermined values (e.g., freeze the weights and/or biases of one or more first layers of the second model 116), and performs a training process, such as a fine tuning process, to configure parameters of one or more second parameters of the second model 116 using the feedback (e.g., one or more second layers of the second model 116, such as output layers or output heads of the second model 116).

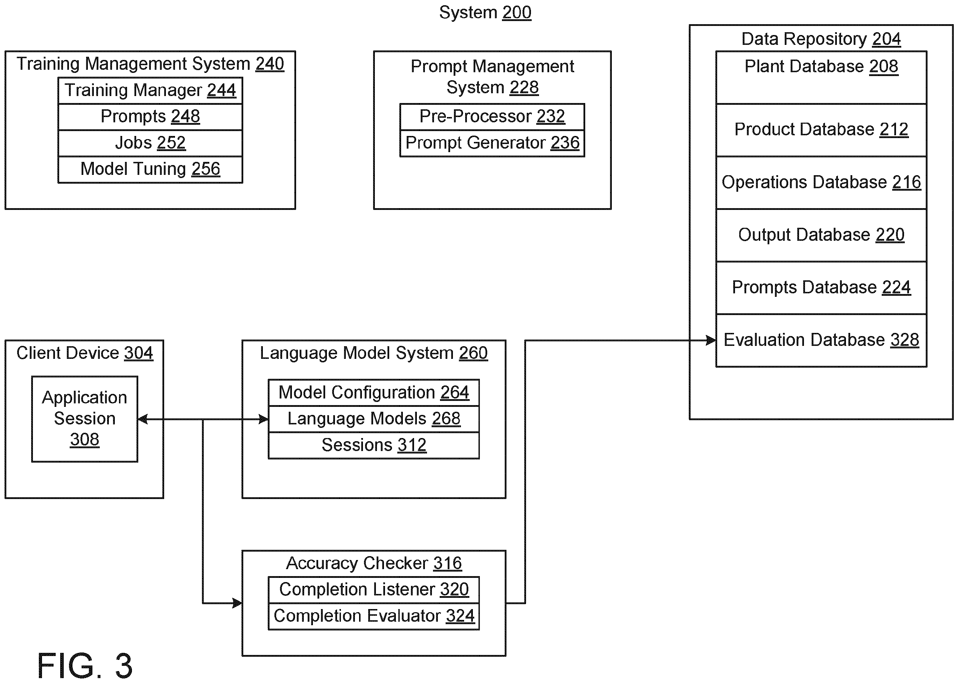

In some implementations, the system 100 may not include and/or use the model updater 108 (or the feedback trainer 128) to determine the second models 116. For example, the system 100 can include or be coupled with an output processor (e.g., an output processor similar or identical to accuracy checker 316 described with reference to FIG. 3) that can evaluate and/or modify outputs from the first model 104 prior to operation of applications 120, including to perform any of various post-processing operations on the output from the first model 104. For example, the output processor can compare outputs of the first model 104 with data from data sources 112 to validate the outputs of the first model 104 and/or modify the outputs of the first model 104 (or output an error) responsive to the outputs not satisfying a validation condition.

### Connected Machine Learning Models

Referring further to FIG. 1, the second model 116 can be coupled with one or more third models, functions, or algorithms for training/configuration and/or runtime operations. The third models can include, for example and without limitation, any of various models relating to items of equipment, such as energy usage models, sustainability models, carbon models, air quality models, or occupant comfort models. For example, the second model 116 can be used to process unstructured information regarding items of equipment into predefined template formats compatible with various third models, such that outputs of the second model 116 can be provided as inputs to the third models; this can allow more accurate training of the third models, more training data to be generated for the third models, and/or more data available for use by the third models. The second model 116 can receive inputs from one or more third models, which can provide greater data to the second model 116 for processing.

### Automated Model Generation and Simulation

The system 100 can be used to generate a central utility plant model based on user input describing characteristics of a central utility plant, where the central utility plant includes textual or audible input to the system 100. The system can use the model 104 and/or the model 116 to identify a plurality of pieces of building equipment satisfying the characteristics of the user input using an AI model based on the user input and to generate a central utility plant model for the central utility plant based on the textual or audible input. The model 104 and/or the model 116 are configured such that the central utility plant model satisfies the characteristics described by the user input and include the identified pieces of building equipment (e.g., virtual representations of the identified equipment and connections therebetween). In some embodiments, the system 100 is also configured to determine simulations to run using the generated central utility plant model, for example based on textual or audible input to the system 100 relating to a user query that can be addressed by executing simulations using the central utility plant model.

### II. SYSTEM ARCHITECTURES FOR GENERATIVE AI APPLICATIONS FOR BUILDING MANAGEMENT SYSTEM AND CENTRAL PLANT MODELING

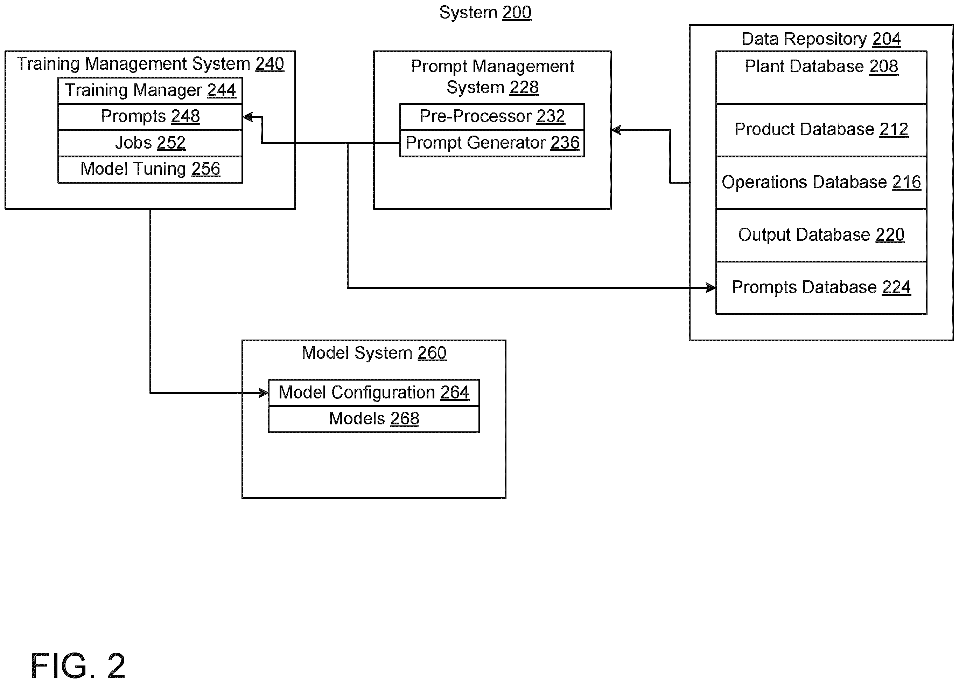

FIG. 2 depicts an example of a system 200. The system 200 can include one or more components or features of the system 100, such as any one or more of the first model 104, data sources 112, second model 116, applications 120, feedback repository 124, and/or feedback trainer 128. The system 200 can perform specific operations to enable generative AI applications for building managements systems and equipment servicing, such as various manners of processing input data into training data (e.g., tokenizing input data; forming input data into prompts and/or completions), and managing training and other machine learning model configuration processes. Various components of the system 200 can be implemented using one or more computer systems, which may be provided on the same or different processors (e.g., processors communicatively coupled via wired and/or wireless connections).

The system 200 can include at least one data repository 204, which can be similar to the data sources 112 described with reference to FIG. 1. For example, the data repository 204 can include a plant database 208, which can be similar or identical to one or more of data sources 112. For example, the plant database 208 can include data such as central utility plant models; central utility plant descriptions; equipment specification and performance data; and sustainability data.

The data repository 204 can include a product database 212, which can be similar to or include equipment specification data of the data sources 112. The product database 212 can include, for example, data regarding products (e.g., equipment) available from various vendors, specifications or parameters regarding products, and indications of products used for various service operations. The products database 212 can include data such as events or alarms associated with products; logs of product operation; and/or time series data regarding product operation, such as longitudinal data values of operation of products and/or building equipment.

The data repository 204 can include an operations database 216, which can be similar or identical to the equipment performance data and/or equipment specification data of the data sources 112. For example, the operations database 216 can include data such as manuals regarding parts, products, and/or items of equipment; customer service data; and or reports, such as operation or service logs; operating data (e.g., measured consumption or production of equipment; etc.

In some implementations, the data repository 204 can include an output database 220, which can include data of outputs that may be generated by various machine learning models and/or algorithms. For example, the output database 220 can include values of pre-calculated predictions and/or insights, such as parameters regarding operation items of equipment, such as setpoints, changes in setpoints, flow rates, control schemes, identifications of error conditions, central plant models, or various combinations thereof.

As depicted in FIG. 2, the system 200 can include a prompt management system 228. The prompt management system 228 can include one or more rules, heuristics, logic, policies, algorithms, functions, machine learning models, neural networks, scripts, or various combinations thereof to perform operations including processing data from data repository 204 into training data for configuring various machine learning models. For example, the prompt management system 228 can retrieve and/or receive data from the data repository 228, and determine training data elements that include examples of input and outputs for generation by machine learning models, such as a training data element that includes a prompt and a completion corresponding to the prompt, based on the data from the data repository 228.

In some implementations, the prompt management system 228 includes a pre-processor 232. The pre-processor 232 can perform various operations to prepare the data from the data repository 204 for prompt generation. For example, the pre-processor 232 can perform any of various filtering, compression, tokenizing, or combining (e.g., combining data from various databases of the data repository 204) operations.

The prompt management system 228 can include a prompt generator 236. The prompt generator 236 can generate, from data of the data repository 204, one or more training data elements that include a prompt and a completion corresponding to the prompt. In some implementations, the prompt generator 236 receives user input indicative of prompt and completion portions of data. For example, the user input can indicate template portions representing prompts of structured data, such as predefined fields or forms of documents, and corresponding completions provided for the documents. The user input can assign prompts to unstructured data. In some implementations, the prompt generator 236 automatically determines prompts and completions from data of the data repository 204, such as by using any of various natural language processing algorithms to detect prompts and completions from data. In some implementations, the system 200 does not identify distinct prompts and completions from data of the data repository 204.

Referring further to FIG. 2, the system 200 can include a training management system 240. The training management system 240 can include one or more rules, heuristics, logic, policies, algorithms, functions, machine learning models, neural networks, scripts, or various combinations thereof to perform operations including controlling training of machine learning models, including performing fine tuning and/or transfer learning operations.

The training management system 240 can include a training manager 244. The training manager 244 can incorporate features of at least one of the model updater 108 or the feedback trainer 128 described with reference to FIG. 1. For example, the training manager 244 can provide training data including a plurality of training data elements (e.g., prompts and corresponding completions) to the model system 260 as described further herein to facilitate training machine learning models.

In some implementations, the training management system 240 includes a prompts database 248. For example, the training management system 240 can store one or more training data elements from the prompt management system 228, such as to facilitate asynchronous and/or batched training processes.

The training manager 244 can control the training of machine learning models using information or instructions maintained in a model tuning database 256. For example, the training manager 244 can store, in the model tuning database 256, various parameters or hyperparameters for models and/or model training.

In some implementations, the training manager 244 stores a record of training operations in a jobs database 252. For example, the training manager 244 can maintain data such as a queue of training jobs, parameters or hyperparameters to be used for training jobs, or information regarding performance of training.

Referring further to FIG. 2, the system 200 can include at least one model system 260 (e.g., one or more language model systems). The model system 260 can include one or more rules, heuristics, logic, policies, algorithms, functions, machine learning models, neural networks, scripts, or various combinations thereof to perform operations including configuring one or more machine learning models 268 based on instructions from the training management system 240. In some implementations, the training management system 240 implements the model system 260. In some implementations, the training management system 240 can access the model system 260 using one or more APIs, such as to provide training data and/or instructions for configuring machine learning models 268 via the one or more APIs. The model system 260 can operate as a service layer for configuring the machine learning models 268 responsive to instructions from the training management system 240. The machine learning models 268 can be or include the first model 104 and/or second model 116 described with reference to FIG. 1.

The model system 260 can include a model configuration processor 264. The model configuration processor 264 can incorporate features of the model updater 108 and/or the feedback trainer 128 described with reference to FIG. 1. For example, the model configuration processor 264 can apply training data (e.g., prompts 248 and corresponding completions) to the machine learning models 268 to configure (e.g., train, modify, update, fine-tune, etc.) the machine learning models 268. The training manager 244 can control training by the model configuration processor 264 based on model tuning parameters in the model tuning database 256, such as to control various hyperparameters for training. In various implementations, the system 200 can use the training management system 240 to configure the machine learning models 268 in a similar manner as described with reference to the second model 116 of FIG. 1, such as to train the machine learning models 268 using any of various data or combinations of data from the data repository 204.

### Application Session Management

FIG. 3 depicts an example of the system 200, in which the system 200 can perform operations to implement at least one application session 308 for a client device 304. For example, responsive to configuring the machine learning models 268, the system 200 can generate data for presentation by the client device 304 (including generating data responsive to information received from the client device 304) using the at least one application session 308 and the one or more machine learning models 268.

The client device 304 can be a device of a user, such as a technician or building manager. The client device 304 can include any of various wireless or wired communication interfaces to communicate data with the model system 260, such as to provide requests to the model system 260 indicative of data for the machine learning models 268 to generate, and to receive outputs from the model system 260. The client device 304 can include various user input and output devices to facilitate receiving and presenting inputs and outputs.

In some implementations, the system 200 provides data to the client device 304 for the client device 304 to operate the at least one application session 308. The application session 308 can include a session corresponding to any of the applications 120 described with reference to FIG. 1. For example, the client device 304 can launch the application session 308 and provide an interface to request one or more prompts. Responsive to receiving the one or more prompts, the application session 308 can provide the one or more prompts as input to the machine learning model 268. The machine learning model 268 can process the input to generate a completion, and provide the completion to the application session 308 to present via the client device 304. In some implementations, the application session 308 can iteratively generate completions using the machine learning models 268. For example, the machine learning models 268 can receive a first prompt from the application session 308, determine a first completion based on the first prompt and provide the first completion to the application session 308, receive a second prompt from the application 308, determine a second completion based on the second prompt (which may include at least one of the first prompt or the first completion concatenated to the second prompt), and provide the second completion to the application session 308.

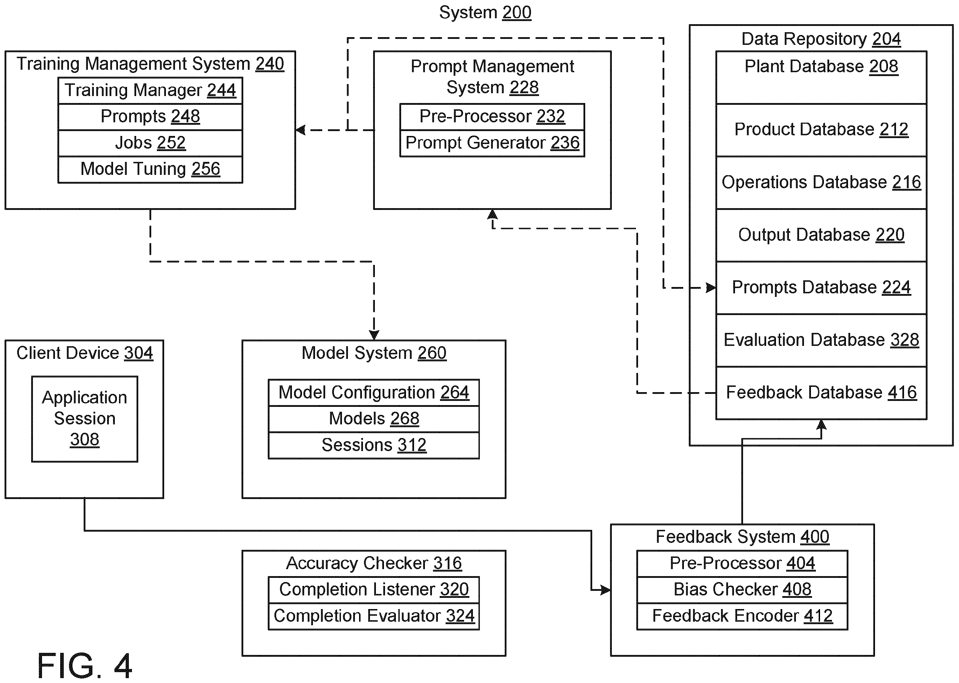

In some implementations, the model system 260 includes at least one sessions database 312. The sessions database 312 can maintain records of application session 308 implemented by client devices 304. For example, the sessions database 312 can include records of prompts provided to the machine learning models 268 and completions generated by the machine learning models 268. As described further with reference to FIG. 4, the system 200 can use the data in the sessions database 312 to fine-tune or otherwise update the machine learning models 268.

### Completion Checking

In some implementations, the system 200 includes an accuracy checker 316. The accuracy checker 316 can include one or more rules, heuristics, logic, policies, algorithms, functions, machine learning models, neural networks, scripts, or various combinations thereof to perform operations including evaluating performance criteria regarding the completions determined by the model system 260. For example, the accuracy checker 316 can include at least one completion listener 320. The completion listener 320 can receive the completions determined by the model system 320 (e.g., responsive to the completions being generated by the machine learning model 268 and/or by retrieving the completions from the sessions database 312).

The accuracy checker 316 can include at least one completion evaluator 324. The completion evaluator 324 can evaluate the completions (e.g., as received or retrieved by the completion listener 320) according to various criteria. In some implementations, the completion evaluator 324 evaluates the completions by comparing the completions with corresponding data from the data repository 204. For example, the completion evaluator 324 can identify data of the data repository 204 having similar text as the prompts and/or completions (e.g., using any of various natural language processing algorithms), and determine whether the data of the completions is within a range of expected data represented by the data of the data repository 204.

In some implementations, the accuracy checker 316 can store an output from evaluating the completion (e.g., an indication of whether the completion satisfies the criteria) in an evaluation database 328. For example, the accuracy checker 316 can assign the output (which may indicate at least one of a binary indication of whether the completion satisfied the criteria or an indication of a portion of the completion that did not satisfy the criteria) to the completion for storage in the evaluation database 328, which can facilitate further training of the machine learning models 268 using the completions and output.

### Feedback Training

FIG. 4 depicts an example of the system 200 that includes a feedback system 400, such as a feedback aggregator. The feedback system 400 can include one or more rules, heuristics, logic, policies, algorithms, functions, machine learning models, neural networks, scripts, or various combinations thereof to perform operations including preparing data for updating and/or updating the machine learning models 268 using feedback corresponding to the application sessions 308, such as feedback received as user input associated with outputs presented by the application sessions 308. The feedback system 400 can incorporate features of the feedback repository 124 and/or feedback trainer 128 described with reference to FIG. 1.

The feedback system 400 can receive feedback (e.g., from the client device 304) in various formats. For example, the feedback can include any of text, speech, audio, image, and/or video data. The feedback can be associated (e.g., in a data structure generated by the application session 308) with the outputs of the machine learning models 268 for which the feedback is provided. The feedback can be received or extracted from various forms of data, including external data sources such as manuals, service reports, or Wikipedia-type documentation.

In some implementations, the feedback system 400 includes a pre-processor 400. The pre-processor 400 can perform any of various operations to modify the feedback for further processing. For example, the pre-processor 400 can incorporate features of, or be implemented by, the pre-processor 232, such as to perform operations including filtering, compression, tokenizing, or translation operations (e.g., translation into a common language of the data of the data repository 204).

The feedback system 400 can include a bias checker 408. The bias checker 408 can evaluate the feedback using various bias criteria, and control inclusion of the feedback in a feedback database 416 (e.g., a feedback database 416 of the data repository 204 as depicted in FIG. 4) according to the evaluation. The bias criteria can include, for example and without limitation, criteria regarding qualitative and/or quantitative differences between a range or statistic measure of the feedback relative to actual, expected, or validated values.

The feedback system 400 can include a feedback encoder 412. The feedback encoder 412 can process the feedback (e.g., responsive to bias checking by the bias checker 408) for inclusion in the feedback database 416. For example, the feedback encoder 412 can encode the feedback as values corresponding to outputs scoring determined by the model system 260 while generating completions (e.g., where the feedback indicates that the completion presented via the application session 308 was acceptable, the feedback encoder 412 can encode the feedback by associating the feedback with the completion and assigning a relatively high score to the completion).

As indicated by the dashed arrows in FIG. 4, the feedback can be used by the prompt management system 228 and training management system 240 to further update one or more machine learning models 268. For example, the prompt management system 228 can retrieve at least one feedback (and corresponding prompt and completion data) from the feedback database 416, and process the at least one feedback to determine a feedback prompt and feedback completion to provide to the training management system 240 (e.g., using pre-processor 232 and/or prompt generator 236, and assigning a score corresponding to the feedback to the feedback completion). The training manager 244 can provide instructions to the model system 260 to update the machine learning models 268 using the feedback prompt and the feedback completion, such as to perform a fine-tuning process using the feedback prompt and the feedback completion. In some implementations, the training management system 240 performs a batch process of feedback-based fine tuning by using the prompt management system 228 to generate a plurality of feedback prompts and a plurality of feedback completion, and providing instructions to the model system 260 to perform the fine-tuning process using the plurality of feedback prompts and the plurality of feedback completions.

### Data Filtering and Validation Systems

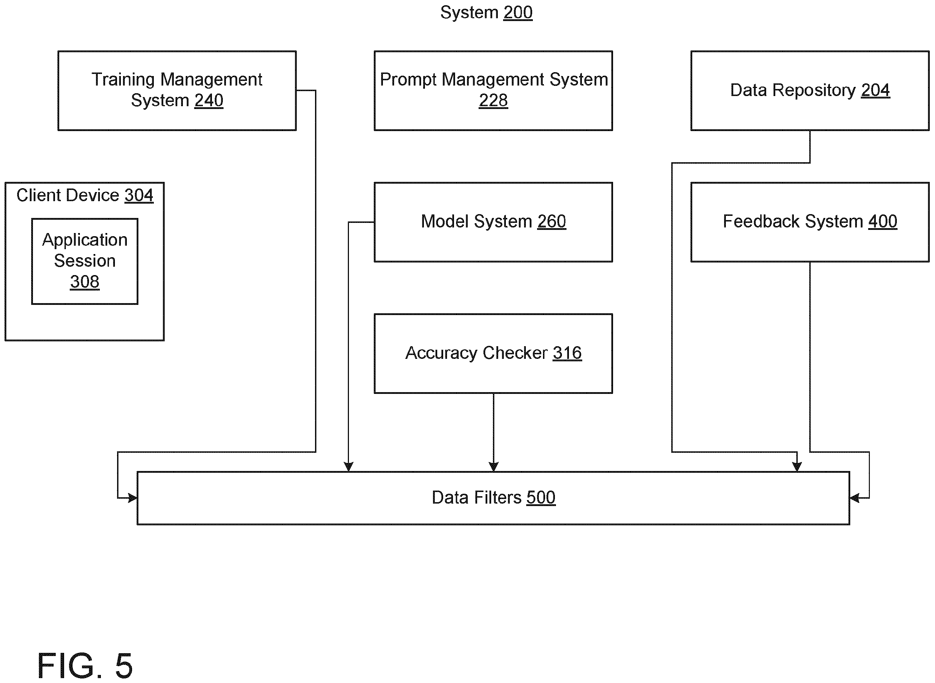

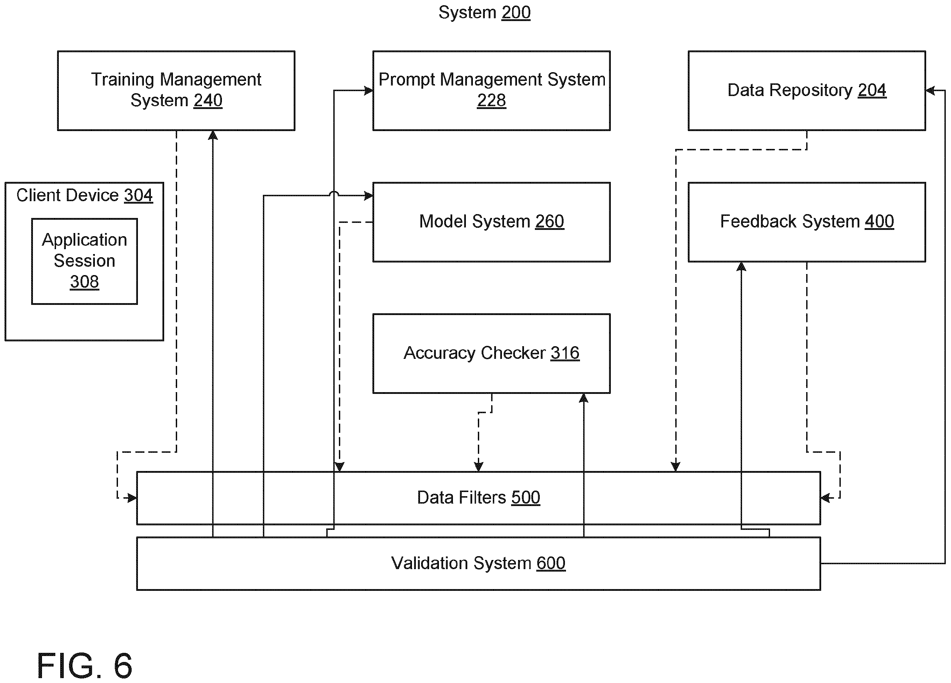

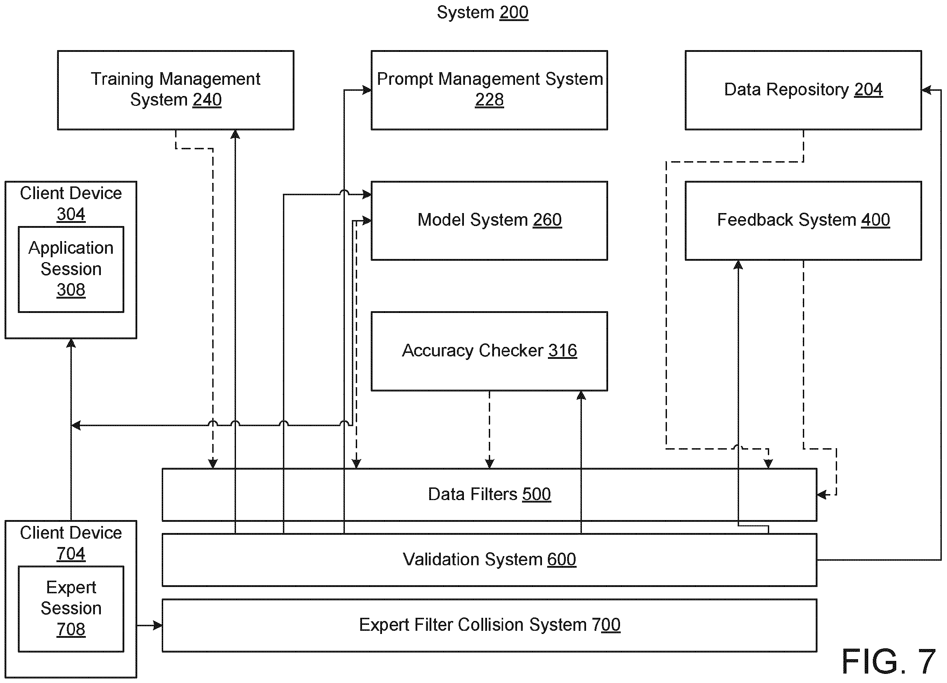

FIG. 5 depicts an example of the system 200, where the system 200 can include one or more data filters 500 (e.g., data validators). The data filters 500 can include any one or more rules, heuristics, logic, policies, algorithms, functions, machine learning models, neural networks, scripts, or various combinations thereof to perform operations including modifying data processed by the system 200 and/or triggering alerts responsive to the data not satisfying corresponding criteria, such as thresholds for values of data. Various data filtering processes described with reference to FIG. 5 (as well as FIGS. 6 and 7) can enable the system 200 to implement timely operations for improving the precision and/or accuracy of completions or other information generated by the system 200 (e.g., including improving the accuracy of feedback data used for fine-tuning the machine learning models 268). The data filters 500 can allow for interactions between various algorithms, models, and computational processes.

For example, the data filters 500 can be used to evaluate data relative to thresholds relating to data including, for example and without limitation, acceptable data ranges, setpoints, temperatures, pressures, flow rates (e.g., mass flow rates), or vibration rates for an item of equipment. The threshold can include any of various thresholds, such as one or more of minimum, maximum, absolute, relative, fixed band, and/or floating band thresholds.

The data filters 500 can enable the system 200 to detect when data, such as prompts, completions, or other inputs and/or outputs of the system 200, collide with thresholds that represent realistic behavior or operation or other limits of items of equipment. For example, the thresholds of the data filters 500 can correspond to values of data that are within feasible or recommended operating ranges. In some implementations, the system 200 determines or receives the thresholds using models or simulations of items of equipment, such as plant or equipment simulators, chiller models, HVAC-R models, refrigeration cycle models, etc. The system 200 can receive the thresholds as user input (e.g., from experts, technicians, or other users). The thresholds of the data filters 500 can be based on information from various data sources. The thresholds can include, for example and without limitation, thresholds based on information such as equipment limitations, safety margins, physics, expert teaching, etc. For example, the data filters 500 can include thresholds determined from various models, functions, or data structures (e.g., tables) representing physical properties and processes, such as physics of psychometrics, thermodynamics, and/or fluid dynamics information.

The system 200 can determine the thresholds using the feedback system 400 and/or the client device 304, such as by providing a request for feedback that includes a request for a corresponding threshold associated with the completion and/or prompt presented by the application session 308. For example, the system 200 can use the feedback to identify realistic thresholds, such as by using feedback regarding data generated by the machine learning models 268 for ranges, setpoints, and/or start-up or operating sequences regarding items of equipment (and which can thus be validated by human experts). In some implementations, the system 200 selectively requests feedback indicative of thresholds based on an identifier of a user of the application session 308, such as to selectively request feedback from users having predetermined levels of expertise and/or assign weights to feedback according to criteria such as levels of expertise.

In some implementations, one or more data filters 500 correspond to a given setup. For example, the setup can represent a configuration of a corresponding item of equipment (e.g., configuration of a chiller, etc.). The data filters 500 can represent various thresholds or conditions with respect to values for the configuration, such as feasible or recommendation operating ranges for the values. In some implementations, one or more data filters 500 correspond to a given situation. For example, the situation can represent at least one of an operating mode or a condition of a corresponding item of equipment.

FIG. 5 depicts some examples of data (e.g., inputs, outputs, and/or data communicated between nodes of machine learning models 268) to which the data filters 500 can be applied to evaluate data processed by the system 200 including various inputs and outputs of the system 200 and components thereof. This can include, for example and without limitation, filtering data such as data communicated between one or more of the data repository 204, prompt management system 228, training management system 240, model system 260, client device 304, accuracy checker 316, and/or feedback system 400. For example, the data filters 500 (as well as validation system 600 described with reference to FIG. 6 and/or expert filter collision system 700 described with reference to FIG. 7) can receive data outputted from a source (e.g., source component) of the system 200 for receipt by a destination (e.g., destination component) of the system 200, and filter, modify, or otherwise process the outputted data prior to the system 200 providing the outputted data to the destination. The sources and destinations can include any of various combinations of components and systems of the system 200.

The system 200 can perform various actions responsive to the processing of data by the data filters 500. In some implementations, the system 200 can pass data to a destination without modifying the data (e.g., retaining a value of the data prior to evaluation by the data filter 500) responsive to the data satisfying the criteria of the respective data filter(s) 500. In some implementations, the system 200 can at least one of (i) modify the data or (ii) output an alert responsive to the data not satisfying the criteria of the respective data filter(s) 500. For example, the system 200 can modify the data by modifying one or more values of the data to be within the criteria of the data filters 500.

In some implementations, the system 200 modifies the data by causing the machine learning models 268 to regenerate the completion corresponding to the data (e.g., for up to a predetermined threshold number of regeneration attempts before triggering the alert). This can enable the data filters 500 and the system 200 selectively trigger alerts responsive to determining that the data (e.g., the collision between the data and the thresholds of the data filters 500) may not be repairable by the machine learning model 268 aspects of the system 200.

The system 200 can output the alert to the client device 304. The system 200 can assign a flag corresponding to the alert to at least one of the prompt (e.g., in prompts database 224) or the completion having the data that triggered the alert.

FIG. 6 depicts an example of the system 200, in which a validation system 600 is coupled with one or more components of the system 200, such as to process and/or modify data communicated between the components of the system 200. For example, the validation system 600 can provide a validation interface for human users (e.g., expert supervisors, checkers) and/or expert systems (e.g., data validation systems that can implement processes analogous to those described with reference to the data filters 500) to receive data of the system 200 and modify, validate, or otherwise process the data. For example, the validation system 600 can provide to human expert supervisors, human checkers, and/or expert systems various data of the system 200, receive responses to the provided data indicating requested modifications to the data or validations of the data, and modify (or validate) the provided data according to the responses.

For example, the validation system 600 can receive data such as data retrieved from the data repository 204, prompts outputted by the prompt management system 228, completions outputted by the model system 260, indications of accuracy outputted by the accuracy checker 316, etc., and provide the received data to at least one of an expert system or a user interface. In some implementations, the validation system 600 receives a given item of data prior to the given item of data being processed by the model system 260, such as to validate inputs to the machine learning models 268 prior to the inputs being processed by the machine learning models 268 to generate outputs, such as completions.

In some implementations, the validation system 600 validates data by at least one of (i) assigning a label (e.g., a flag, etc.) to the data indicating that the data is validated or (ii) passing the data to a destination without modifying the data. For example, responsive to receiving at least one of a user input (e.g., from a human validator/supervisor/expert) that the data is valid or an indication from an expert system that the data is valid, the validation system 600 can assign the label and/or provide the data to the destination.

The validation system 600 can selectively provide data from the system 200 to the validation interface responsive to operation of the data filters 500. This can enable the validation system 600 to trigger validation of the data responsive to collision of the data with the criteria of the data filters 500. For example, responsive to the data filters 500 determining that an item of data does not satisfy a corresponding criteria, the data filters 500 can provide the item of data to the validation system 600. The data filters 500 can assign various labels to the item of data, such as indications of the values of the thresholds that the data filters 500 used to determine that the item of data did not satisfy the thresholds. Responsive to receiving the item of data from the data filters 500, the validation system 600 can provide the item of data to the validation interface (e.g., to a user interface of client device 304 and/or application session 308; for comparison with a model, simulation, algorithm, or other operation of an expert system) for validation. In some implementations, the validation system 600 can receive an indication that the item of data is valid (e.g., even if the item of data did not satisfy the criteria of the data filters 500) and can provide the indication to the data filters 500 to cause the data filters 500 to at least partially modify the respective thresholds according to the indication.

In some implementations, the validation system 600 selectively retrieves data for validation where (i) the data is determined or outputted prior to use by the machine learning models 268, such as data from the data repository 204 or the prompt management system 228, or (ii) the data does not satisfy a respective data filter 500 that processes the data. This can enable the system 200, the data filters 500, and the validation system 600 to update the machine learning models 268 and other machine learning aspects (e.g., generative AI aspects) of the system 200 to more accurately generate data and completions (e.g., enabling the data filters 500 to generate alerts that are received by the human experts/expert systems that may be repairable by adjustments to one or more components of the system 200).

FIG. 7 depicts an example of the system 200, in which an expert filter collision system 700 ("expert system" 700) can facilitate providing feedback and providing more accurate and/or precise data and completions to a user via the application session 308. For example, the expert system 700 can interface with various points and/or data flows of the system 200, as depicted in FIG. 7, where the system 200 can provide data to the expert filter collision system 700, such as to transmit the data to a user interface and/or present the data via a user interface of the expert filter collision system 700 that can accessed via an expert session 708 of a client device 704. For example, via the expert session 708, the expert session 700 can enable functions such as receiving inputs for a human expert to provide feedback to a user of the client device 304; a human expert to guide the user through the data (e.g., completions) provided to the client device 304, such as reports, insights, and action items; a human expert to review and/or provide feedback for revising insights, guidance, and recommendations before being presented by the application session 308; a human expert to adjust and/or validate insights or recommendations before they are viewed or used for actions by the user; or various combinations thereof. In some implementations, the expert system 700 can use feedback received via the expert session as inputs to update the machine learning models 268 (e.g., to perform fine-tuning).

In some implementations, the expert system 700 retrieves data to be provided to the application session 308, such as completions generated by the machine learning models 268. The expert system 700 can present the data via the expert session 708, such as to request feedback regarding the data from the client device 704. For example, the expert system 700 can receive feedback regarding the data for modifying or validating the data (e.g., editing or validating completions). In some implementations, the expert system 700 requests at least one of an identifier or a credential of a user of the client device 704 prior to providing the data to the client device 704 and/or requesting feedback regarding the data from the expert session 708. For example, the expert system 700 can request the feedback responsive to determining that the at least one of the identifier or the credential satisfies a target value for the data. This can allow the expert system 708 to selectively identify experts to use for monitoring and validating the data.

In some implementations, the expert system 700 facilitates a communication session regarding the data, between the application session 308 and the expert session 708. For example, the expert session 700, responsive to detecting presentation of the data via the application session 308, can request feedback regarding the data (e.g., user input via the application session 308 for feedback regarding the data), and provide the feedback to the client device 704 to present via the expert session 708. The expert session 708 can receive expert feedback regarding at least one of the data or the feedback from the user to provide to the application session 308. In some implementations, the expert system 700 can facilitate any of various real-time or asynchronous messaging protocols between the application session 308 and expert session 708 regarding the data, such as any of text, speech, audio, image, and/or video communications or combinations thereof. This can allow the expert system 700 to provide a platform for a user receiving the data (e.g., customer or field technician) to receive expert feedback from a user of the client device 704 (e.g., expert technician). In some implementations, the expert system 700 stores a record of one or more messages or other communications between the sessions 308, 708 in the data repository 204 to facilitate further configuration of the machine learning models 268 based on the interactions between the users of the sessions 308, 708.

### Building Data Platforms and Digital Twin Architectures

Referring further to FIGS. 1-7, various systems and methods described herein can be executed by and/or communicate with building data platforms, including data platforms of building management systems. For example, the data repository 204 can include or be coupled with one or more building data platforms, such as to ingest data from building data platforms and/or digital twins. The client device 304 can communicate with the system 200 via the building data platform, and can feedback, reports, and other data to the building data platform. In some implementations, the data repository 204 maintains building data platform-specific databases, such as to enable the system 200 to configure the machine learning models 268 on a building data platform-specific basis (or on an entity-specific basis using data from one or more building data platforms maintained by the entity).

For example, in some implementations, various data discussed herein may be stored in, retrieved from, or processed in the context of building data platforms and/or digital twins; processed at (e.g., processed using models executed at) a cloud or other off-premises computing system/device or group of systems/devices, an edge or other on-premises system/device or group of systems/devices, or a hybrid thereof in which some processing occurs off-premises and some occurs on-premises; and/or implemented using one or more gateways for communication and data management amongst various such systems/devices. In some such implementations, the building data platforms and/or digital twins may be provided within an infrastructure such as those described in U.S. Patent Application Nos. 17/134,661 filed December 28, 2020, 18/080,360, filed December 13, 2022, 17/537,046 filed November 29, 2021, and 18/096,965, filed January 13, 2023, and Indian Patent Application No. 202341008712, filed February 10, 2023, the disclosures of which are incorporated herein by reference in their entireties.

### III. GENERATIVE AI-BASED SYSTEMS AND METHODS FOR EQUIPMENT SERVICING

As described above, systems and methods in accordance with the present disclosure can use machine learning models, including LLMs and other generative AI models, to ingest data regarding building management systems and equipment in various unstructured and structured formats, and generate completions and other outputs targeted to provide useful information to users. Various systems and methods described herein can use machine learning models to support applications for presenting data with high accuracy and relevance.

### IV. CENTRAL UTILITY PLANT MODELLING AND SIMULATION

Referring now to FIG. 8, a flow diagram of a process 900 for generating a central utility plant model and providing a response to a user query relating to the central utility plant is shown, according to some embodiments. Process 900 can be performed using various devices and systems described herein, including but not limited to the systems 100, 200 or one or more components thereof. Various aspects of the process 900 can be implemented using one or more devices or systems that are communicatively coupled with one another, including in client-server, cloud-based, or other networked architectures. Process 900 can be implemented as part of the systems and processes of, or using teachings adapted from, U.S. Patent Application No. 17/826,635, filed May 27, 2022, the entire disclosure of which is incorporated by reference herein.

At step 902, user input describing characteristics of a central utility plant are received, for example by one or more processors. The user input can be received via a client device 304, for example. The user input can include textual or audible input, for example input received via a free-text field of graphical user interface and/or via a microphone receiving audible input (e.g., spoken description) from a user. For example, a user may describe to the client device 304 (e.g., in an application session 308) characteristics of the central utility plant including what equipment is located in the plant, an arrangement of the equipment in the plant, the climate of the location of the central utility plant, a description of the type of building(s) served by the central utility plant, a size of the central utility plant, etc. and such description is received in step 902. In some embodiments, the user input received in step 902 also includes documentation, data, etc. relating to the central plant, for example project documentation from construction of the central plant, requisition of central plant equipment, and/or installation or service of central plant equipment (e.g., blueprints, plant configuration plans, scope of work documents, bills of materials, invoices, etc.). The user input can thus include a variety of unstructured data describing characteristics of the central utility plant.

At step 904, a plurality of pieces of building equipment satisfying the characteristics of the user input are identified using at least one artificial intelligence (AI) model, for example at least one generative AI model. The plurality of pieces of building equipment determined in step 904 can include identifiers of the type of the pieces (e.g., chiller, boiler, etc.), a model type/number (e.g., a particular model of chiller or boiler), and/or other characteristics of the equipment (e.g., maximum capacity, inputs of the equipment, outputs of the equipment, etc.). To enable step 904, the at least one AI model (e.g,. generative AI model) can be fine-tuned using domain-specific training data including lists of pieces of building equipment present in central utility plants and user descriptions of such central utility plants, using the techniques described in detail above. Accordingly, at least one AI model can be configured for use in step 904 to predict the pieces of building equipment present in a central plant based on the user input describing characteristics of the central utility plant.

In some embodiments, step 904 includes a conversational interaction, generated by one or more processors using at least one generative AI model, in which the system prompts the user for further information to help guide identification of the plurality of pieces of building equipment. For example, if the initial user input identifies that the central plant includes chillers, step 904 can include using at least one generative AI model to provide conversational feedback to the user prompting the user to indicate how many chillers are included, what different models or types of chillers are included, etc. Step 904 can thus include providing interactions with a user that result in collection of additional description of the central utility plant and use of such additional description to identify the pieces of building equipment of the central plant.

At step 906, using the at least one AI model, a central utility plant model of the central utility plant is generated based on the textual or audible input such that the central utility plant model satisfies the characteristics and includes the identified pieces of building equipment. Step 906 can include providing the central utility plant model according to a template for central utility plant models such that the central utility plant model is a suitable format, data structure, etc. for use further processing steps involving the central utility plant model. The AI model can to generate data confirming to the template, consistent with teachings elsewhere herein. Step 906 can include identifying connections between the identified pieces of the building equipment, for example such that the central utility plant model indicates resources which flow between certain pieces of equipment and/or other interrelationships between equipment of the central utility plant model. The central utility plant model can include equipment models for each piece of equipment or subplant, layout data or schematic data indicating how the equipment are physically connected to each other, constraints based on the equipment capacities and/or the physical connections, and/or other information, diagrams, mathematical relationships, etc. relating to interoperation of equipment and/or subplants included in the central plant. For example, the central utility plant model can include equipment models for the identified pieces of building equipment and constraints defining relationships between the equipment models and representing physical connections between the identified pieces of building equipment (e.g., a constraint describing that the outputs of one equipment model are the inputs to another equipment model to describe a physical relationship where one piece of equipment provides a resources to another piece of equipment). The central utility plant model generated in step 906 can be consistent with the plant models described and/or use in U.S. Patent Application No. 17/826,635, filed May 27, 2022, U.S. Patent No. 10,706,375 granted July 8, 2020, and/or U.S. Patent No. 11,238,547 granted February 1, 2022, and/or U.S. Application No. 17/733,786 filed April 29, 2022, the entire disclosures of which are incorporated by reference herein.

In some embodiments, step 906 includes a conversational interaction, generated by one or more processors using at least one generative AI model, in which the system prompts the user for further information to help guide generating of the central utility plant model. For example, at least one generative AI model may be configured provide conversational feedback to the user prompting the user to describe connections between certain of the identified pieces of equipment which may not have been described or implied by the user's prior inputs. Step 906 can include prompting the user to confirm certain determinations made by the at least one AI model, for prompting the user to indicate whether two identified pieces of equipment are connected in a manner estimated by the at least one AI model. Step 906 can thus include providing interactions with a user that result in collection of additional description of the central utility plant and use of such additional description to generate the central utility plant model.

A central utility plant model is thereby generated in process 900 based on natural language inputs or other unstructured data inputs from a user. In some embodiments, the central utility plant model is thereby generated without the user directly manipulating structured data in the template format for the central utility plant model. A user can thus use process 900 and the systems herein to generate a central utility plant model without needing expertise in the modeling techniques used, details of the model template, other programming skills, etc. In some embodiments, process 900 can include providing the central utility plant model (e.g., a visualization thereof) to the user for review, approval, adjustment, and/or feedback. Any feedback or adjustments provided with respect to the central utility plant model can be used for further training and fine-tuning of the at least one AI model used in steps 904 and 906, for example with the goal of driving model training to reduce any need for manual user adjustment of central utility plant models output by the at least one AI models. Various teachings above can be used to implement such model improvements over time.

The central utility plant model can be used for a variety of simulation tasks, online control (e.g., for optimally allocating demand and/or resources across equipment of the central plant, determining optimal settings for equipment of the central plant, etc.), fault detection or diagnosis, among other advantageous features that can be enabled by an accurate and efficiently-generated central utility plant model. Steps 908-912 described in the following passages, provide for use of the central utility plant model generated via steps 902-906, according to some embodiments.

At step 908, a user query is received (e.g., by one or more processors) relating to a desired outcome for the central utility plant as an unstructured natural language input. For example, the user query can be received as textual or audible input from a user via a client device 304. The user query can indicate a desired outcome for the central utility plant, for example a reduction in usage of a particular resource, a reduction in costs, a net energy consumption target, a goal of meeting a budget for resource consumption, a goal of meeting a planned change in demand on the central utility plant (e.g., due to additions to building(s) served by the central utility plant, etc.). To provide illustrative examples, the user query may be "how can I save 20% of water," "how can I reduce investment by 10%," "how can the central plant be updated to provide 20% more cooling," etc., according to various examples and goals. In some embodiments, the user query can provided additional constraints or degrees of freedom, for example indicating that certain aspects of the central plant should not change (e.g., "how can the plant achieve X without changing Y"), indicating that the additions can be made to the central plant (e.g., "what equipment options do I have for changing the plant to provide Z load," "what equipment options do I have for reducing carbon emissions," etc.), providing other constraints (e.g., "options should be less than $X in initial investment"), or indicating that the result should relate to a particular operating parameter (e.g., "how should I change the supply water temperature setpoint to achieve...", etc.). Any such information defining the scope and purpose of the user's query can be provided by the user and received in step 908. In some embodiments, step 908 includes providing a conversational interaction to the user which prompts the user to clarify any additional aspects of the user request to ensure the input received in step 908 accurately and sufficiently defines the user's query in a manner suitable for used by the at least one generative AI models in step 910 as described in the following passage.

At step 910, a set of simulations is configured, based on the user query and using at least one AI model (e.g., at least one generative AI model). The user query can be an input to the at least one AI model. The set of simulations can include one or more simulations. The set of simulations is configured to provide information which can provide a response to the user query. For instance, certain variations in building operations, certain external conditions (e.g., weather conditions), certain variations in plant equipment including in the central plant, etc. can be determined by the at least one AI model for exploring scenarios contemplated by the user's query. Step 910 can include defining the duration of simulations, the starting conditions for simulations, weather or other conditions to occur during the simulations, changes in equipment settings or equipment availability in different simulations, and various other simulation parameters, in various embodiments. The set of simulations determined in step 910 can include the relevant simulation parameters to determining a response to the user query. Step 910 can be executed by a generative AI model by providing an output in a template format (e.g., a structured format for simulation parameters) based on the unstructured user query, with the generative AI model trained on training data that includes user queries and corresponding sets of simulation parameters (e.g., simulation parameters carefully chosen by expert users) and/or data indicating the relevance of the output of different simulations to different user queries. Step 910 can thereby including predicting, by at least one AI model, that a simulation will provide relevant information to the user query and including that simulation in the set of simulations, while omitting simulations predicted as not providing relevant information to the user query. Step 910 thereby provides for automated, intelligent simulation selection and configuration that can automatically omit simulations not predicted to result in relevant information to the user query. Because executing simulations can be computationally resource intensive, step 910 can result in reduced computational costs for generating a response to the user query by providing for the omission of some simulations that might otherwise be executed.

At step 912, a response to the user query is determined by running the system of simulations using the central utility plant model (e.g., the central utility plant model from step 906). Step 912 can include comparing simulation results according to the teachings of U.S. Patent Application No. 17/826,635, filed May 27, 2022, according to some embodiments. Step 912 can include be provided by adapting teachings of U.S. Patent No. 11,238,547, granted July 22, 2019, relating to determining a recommend size for an asset to be added to a central plant or building, in some embodiments. Step 912 can include providing an analytical comparison of different simulations, for example comparing the costs, resource usage, equipment degradation, etc. resulting from different simulations to identify the simulation having parameters that best aligns with the user query (e.g., identifying simulations in which energy was saved by an amount requested in the user query, identifying a simulation in which the most efficient performance was achieved, etc.) and identifying such parameters as corresponding to solutions to the user query. Step 912 can also include generating, for example by at least one generative AI model trained according to the teachings herein, a descriptive, textual, etc. explanation of the results of the simulations and/or of an answer to the user query based on comparison of the results of the various simulations. Process 900 can thereby provide the user with a natural language answer to a natural language query by running structured simulations using a structured central utility plant model, without requiring that the user interact directly with the simulations or the central utility plant model.

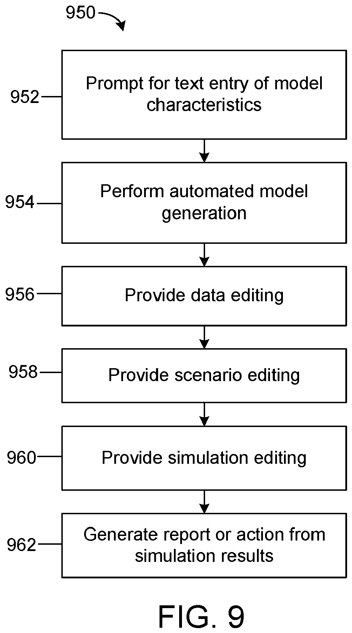

In some embodiments, step 902, step 904, and step 906 are performed while omitting step 908, step 910, and step 912. Examples of such embodiments are shown in FIG. 9, which shows a flowchart of a process 950 where a user is prompted for text entry of model characteristics (step 952) and automated model generation is performed (step 954) to provide a central utility plant model, for example according to the features described above with reference to step 908, step 910, and step 912. Process 950 is also shown as including data editing at step 956 (e.g., manual and/or automated entry, selection, pre-processing, or other handling of data used for model fitting and/or as inputs to simulations), scenario editing at step 958 (e.g., manual creation of one or more scenarios for simulation via a graphical user interface), and simulation editing at step 958 (e.g., manual creation and editing of simulations via a graphical user interface), which can be performed with direct user interaction in order to define simulations to be executed. The simulations can then be run to generate a report of results of a simulation (e.g., a return on investment report) and/or an action (control decision, maintenance action, installation action, etc.) to be executed by a plant to improve operations based on simulation results.

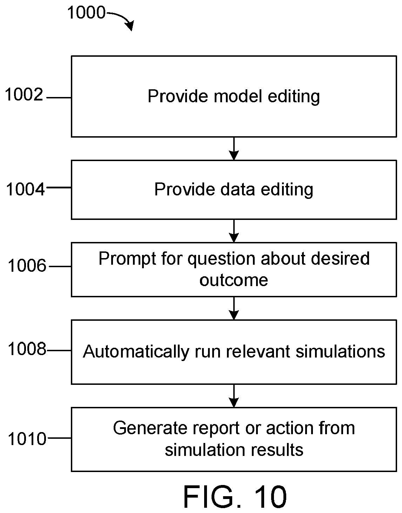

In some embodiments, step 908, step 910, and step 912 are performed without executing step 902, step 904, and step 906 (e.g., using a central plant model created some other way). An example of such embodiments is shown in FIG. 10, which shows a flowchart of a process 1000 where model editing is provided at step 1002 without using the teachings of step 902, step 904, and/or step 906 (e.g., by manual model editing via a graphical user interface without requiring use of AI) and data editing is provided at step 1004 (e.g., also via manual interactions without requiring use of AI). At step 1006, a user can ask a question about a desired outcome, and at step 1008 the question is used to generate and run simulations to output (at step 1010) a report or action to be generated, according to the teachings provided above with reference to step 908, step 910, and step 912.

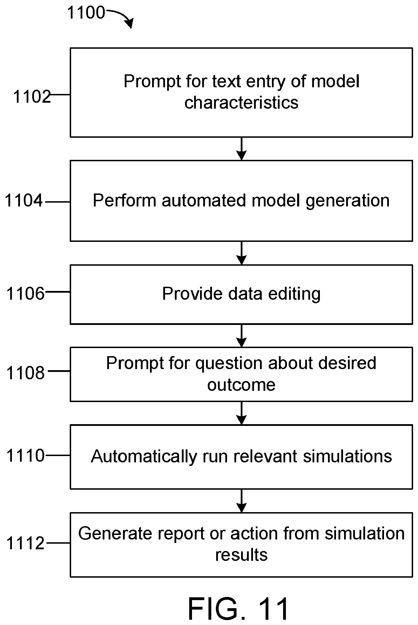

In some embodiments, process 900 is executed in full. An example of such embodiments is shown in FIG. 11, which shows a flowchart of a process 1100 in which free-text entry (e.g., natural language input, textual input, audio input) is accepted from a user to both describe characteristics of a central plant (at step 1102, together with data editing in step 1106) and to ask a question about a desired outcome (at step 1108), with the artificial intelligence approaches of process 900 used both in automated model generation (at step 1104) and in automated simulation configuration and simulation running (at step 1110) to generate a report or action to be implemented as a result of the simulations (at step 1112).

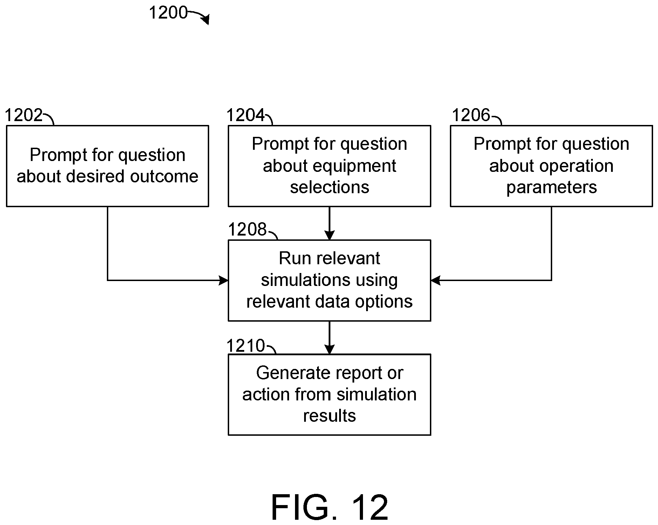

User queries that can be answered in process 900 can be of varying complexity in various embodiments. An example showing a query or queries providing additional details (e.g., constraints, degrees of freedom) for the process 900 to handle is shown in FIG. 12. FIG. 12 shows a flowchart of a process 1200 which illustrates that questions input by users can relate to desired outcomes (e.g., as measured by different performance variables) (in step 1202), equipment selections (e.g., new equipment to install, equipment to remove, etc.) (in step 1204), and operation parameters (e.g., each setpoints, control decisions, settings) (in step 1206), and that the teachings of process 900 and elsewhere herein can be enabled to handle any such user inputs in configuring and running relevant simulations (in step 1208) to provide a report or action to be implemented responsive to the user query. For example, a user may provide a free-text inquiry requesting information on what equipment options the user has, and which operating parameters are needed for a certain type or level of load profiles, given a particular climate in a region in which a plant is located, for example with a constraint on total capital expenditure. The system can address the requests by generating plant models and simulations according to the teachings herein to provide a answer to such user requesting using a combination of generatively-artificially-generated plant models and simulations and analytical results of those simulations.

The following examples are embodiments within the scope of the present disclosure. As a first example, a method can include receiving, by one or more processors, user input describing characteristics of a central utility plant for a building, the user input comprising unstructured natural language input, identifying, by the one or more processors, a plurality of pieces of building equipment satisfying the characteristics of the user input using an AI model based on the user input, generating, by the one or more processors using the AI model, a central utility plant model for the central utility plant based on the textual or audible input, the central utility plant model satisfying the characteristics and including the identified pieces of building equipment, and installing or operating at least one of the plurality of pieces of building equipment based on a result provided using the central utility plant model.

As a second example, the method of the first example can also include wherein the central utility plant model comprises equipment models for the identified pieces of building equipment and constraints defining relationships between the equipment models and representing physical connections between the identified pieces of building equipment.

As a third example is the method of the first or second example, wherein the AI model comprises a generative large language model (LLM) comprising a pretrained generative transformer model. A forth example is the method of the third example, wherein the unstructured natural language input is non-conforming to a predetermined format and comprises text or audio input, and wherein the generative LLM is configured to generate the central utility plant model from the text or audio input. A fifth example is the method of the forth example, wherein the generative LLM is configured to generate the central utility plant model from the unstructured natural language input without requiring manual configuration of the central utility plant model by a user.

A sixth example is the method of any of the first through fifth examples, also including receiving, by the one or more processors, a user query describing a desired outcome relating to the central utility plant, configuring, based on the user query and by the one or more processors using the AI model or an additional AI model, a set of simulations, running, by the one or more processors, the set of simulations using the central utility plant model, and providing, by the one or more processors, a response to the user query based on the running the set of simulations using the central utility plant model.

A seventh example is the method of the sixth example, wherein the response to the user query comprises a physical action to be executed by the central utility plant and the method includes executing, by the central utility plant the physical action. An eighth example is the method of the sixth or seventh example, wherein the user query includes a request for equipment options. A ninth example is the method of any of the sixth through eighth examples, wherein the user query comprises unstructured natural language input.

A tenth example is the method of any of the sixth through ninth examples, wherein the user query further describes a constraint relating to achieving the desired outcome, the desired outcome comprises a production goal for the central utility plant, an energy efficiency or consumption goal for the central utility plant, or a carbon emissions reduction goal for the central utility plant, and the method also includes running the set of simulations using the central utility plant model subject to the constraint.

An eleventh example is the method of any of the sixth through tenth examples, wherein the desired outcome is to reduce resource consumption of the central utility plant by a target amount and the set of simulations includes a first simulation in which a first type of additional equipment is added to the central utility plant and a second simulation in a second type of additional equipment is added to the central utility plant. A twelfth example is the method of any of the first through eleventh examples, also including controlling the central utility plant by performing an optimization using the central utility plant model..

A thirteenth example is the method of any of the sixth through twelfth examples, also including causing, with the response to the user query, a physical change in operation of the central utility plant for the building. A fourteenth example is the method of any of the sixth through thirteenth examples, also including causing, with the response to the user query, installation of a new piece of building equipment in the central utility plant.

A fifteenth example is one or more non-transitory computer-readable media storing program instructions that, when executed by one or more processors, cause the one or more processors to execute the method of any of the first through fourteenth examples.

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements may be reversed or otherwise varied and the nature or number of discrete elements or positions may be altered or varied. Accordingly, all such modifications are intended to be included within the scope of the present disclosure. The order or sequence of any process or method steps may be varied or re-sequenced according to alternative embodiments. Other substitutions, modifications, changes, and omissions may be made in the design, operating conditions and arrangement of the exemplary embodiments without departing from the scope of the present disclosure.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CDROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general purpose computer, special purpose computer, or special purpose processing machines to perform a certain function or group of functions.

Although the figures show a specific order of method steps, the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps.

In various implementations, the steps and operations described herein may be performed on one processor or in a combination of two or more processors. For example, in some implementations, the various operations could be performed in a central server or set of central servers configured to receive data from one or more devices (e.g., edge computing devices/controllers) and perform the operations. In some implementations, the operations may be performed by one or more local controllers or computing devices (e.g., edge devices), such as controllers dedicated to and/or located within a particular building or portion of a building. In some implementations, the operations may be performed by a combination of one or more central or offsite computing devices/servers and one or more local controllers/computing devices. All such implementations are contemplated within the scope of the present disclosure. Further, unless otherwise indicated, when the present disclosure refers to one or more computer-readable storage media and/or one or more controllers, such computer-readable storage media and/or one or more controllers may be implemented as one or more central servers, one or more local controllers or computing devices (e.g., edge devices), any combination thereof, or any other combination of storage media and/or controllers regardless of the location of such devices.

## Claims

1. A method comprising:
- receiving, by one or more processors, user input describing characteristics of a central utility plant for a building, the user input comprising unstructured natural language input;
- identifying, by the one or more processors, a plurality of pieces of building equipment satisfying the characteristics of the central utility plant using an AI model based on the unstructured natural language input;
- generating, by the one or more processors using the AI model, a central utility plant model for the central utility plant based on the unstructured natural language input, the central utility plant model satisfying the characteristics and including the identified pieces of building equipment; and
- installing or operating at least one of the plurality of pieces of building equipment based on a result provided using the central utility plant model.

2. The method of claim 1,
wherein the central utility plant model comprises equipment models for the identified pieces of building equipment and constraints defining relationships between the equipment models and representing physical connections between the identified pieces of building equipment.

3. The method of claim 1 or 2,
wherein the AI model comprises a generative large language model (LLM) comprising a pretrained generative transformer model.

4. The method of claim 3,
wherein the unstructured natural language input is non-conforming to a predetermined format and comprises text or audio input, and wherein the generative LLM is configured to generate the central utility plant model from the text or audio input.

5. The method of claim 3,
wherein the generative LLM is configured to generate the central utility plant model from the unstructured natural language input without requiring manual configuration of the central utility plant model by a user.

6. The method of any of claims 1-5, further comprising:
- receiving, by the one or more processors, a user query describing a desired outcome relating to the central utility plant;
- configuring, based on the user query and by the one or more processors using the AI model or an additional AI model, a set of simulations;
- running, by the one or more processors, the set of simulations using the central utility plant model; and
- providing, by the one or more processors, a response to the user query based on the running the set of simulations using the central utility plant model.

7. The method of claim 6,
wherein the response to the user query comprises a physical action to be executed by the central utility plant, the method comprising executing, by the central utility plant the physical action.

8. The method of claim 6 or 7,
wherein the user query comprises a request for equipment options.

9. The method of any of claims 6-8,
wherein the user query comprises unstructured natural language input.

10. The method of any of claims 6-9, wherein:
- the user query further describes a constraint relating to achieving the desired outcome;
- the desired outcome comprises a production goal for the central utility plant, an energy efficiency or consumption goal for the central utility plant, or a carbon emissions reduction goal for the central utility plant; and
- the method further comprising running the set of simulations using the central utility plant model subject to the constraint.

11. The method of any of claims 6-10,
wherein the desired outcome is to reduce resource consumption of the central utility plant by a target amount and the set of simulations comprises a first simulation in which a first type of additional equipment is added to the central utility plant and a second simulation in a second type of additional equipment is added to the central utility plant.

12. The method of any of claims 1-10,
further comprising controlling the central utility plant by performing an optimization using the central utility plant model.

13. The method of any of claims 6-12,
comprising causing, with the response to the user query, a physical change in operation of the central utility plant for the building.

14. The method of claims 6-13,
further comprising causing, with the response to the user query, installation of a new piece of building equipment in the central utility plant.

15. One or more non-transitory computer-readable media storing program instructions that, when executed by one or more processors, cause the one or more processors to execute the method of any of claims 1-14.
